# EUROPEAN PATENT APPLICATION

(11) **EP 4 044 099 A1**
(43) Date of publication of application: **17.08.2022**
(21) Application number: 20874520.8
(22) Date of filing: 28.09.2020
(51) Int. Cl.: G06Q 40/08

(54) **DISPLAY CONTROL DEVICE, DISPLAY CONTROL METHOD, AND PROGRAM**

(30) Priority: 10.10.2019 JP 2019186745
(71) Applicant: Sony Group Corporation, Tokyo 108-0075 (JP)
(72) Inventor: SAKUMOTO Koichi, Tokyo 108-0075 (JP); WAKITA Yoshihiro, Tokyo 108-0075 (JP); KOBAYASHI Naoko, Tokyo 108-0075 (JP); TANAKA Yu, Tokyo 108-0075 (JP); SATO Makoto, Tokyo 108-0075 (JP)
(74) Representative: MFG Patentanwälte Meyer-Wildhagen Meggle-Freund Gerhard PartG mbB
(86) International application number: PCT/JP2020/036518
(87) International publication number: WO 2021/070649

(57) **Abstract**

The present technology relates to a display control apparatus, a display control method, and a program which allow appropriate insurance to be recommended.

Displayed is an insurance table of insurance, the insurance being detected in accordance with an evaluation value or evaluation values of the insurance preparing for a life relevant event or life relevant events being related to life, the evaluation value or evaluation values being calculated by using a development probability or development probabilities with which the life relevant event or life relevant events develop on a user. The present technology can be applied to a case where the insurance is recommended and other cases.

## Description

### TECHNICAL FIELD

The present technology relates to a display control apparatus, a display control method, and a program and, in particular, to a display control apparatus, a display control method, and a program, for example, which allow appropriate insurance to be recommended.

### BACKGROUND ART

Described in Patent Document 1 is a body information management system which by providing a program for maintaining a health condition of an insured person, maintains the health condition of the insured person and lowers a risk on a side of an insurance company and in a case where likelihood of contraction of a disease is lowered, decreases an insurance premium and in a case where the likelihood of the contraction of the disease is heightened, increases the insurance premium.

As events which develop as to the health condition, there are an event in which the health condition is worsened, an event in which the health condition is improved, and an event in which the health condition is maintained.

As insurance for preparing for the event in which the health condition is worsened, for example, there is mortality insurance, by which insurance money is paid in a case where an insured person has died, or the like. As insurance for preparing for improvement or maintaining of the health condition, for example, there is (perpetual) annuity insurance, by which as long as an insured person continues to live at a predetermined age and thereafter, insurance money is paid, or the like.

As to the mortality insurance for preparing the event in which the health condition is worsened, the health condition of the insured person is maintained, thereby allowing a risk in which insurance company pays insurance money to be lowered. Accordingly, as to the mortality insurance, the insurance company has profit in introduction of the body information management system described in Patent Document 1.

On the other hand, as to the annuity insurance for preparing for the event in which the health condition is improved or maintained, the health condition of the insured person is improved or maintained, thereby increasing a risk in which the insurance company pays the insurance money. Accordingly, as to the annuity insurance, the insurance company has no profit in the introduction of the body information management system described in Patent Document 1.

In view of the above-described respects, although a combination of the body information management system described in Patent Document 1 and the insurance preparing for the event in which the health condition is worsened exhibits effect, a combination of the body information management system described therein and the insurance preparing for the reverse event, that is, the event in which the health condition is improved or maintained has no expected effect.

Furthermore, although the body information management system described in Patent Document 1 can bring about profit for a user who has will to execute the program for maintaining the health condition, the body information management system described therein does not bring about the profit for a user who has no will to execute the program for maintaining the health condition. In other words, likelihood of contraction of the disease of the user who has no will to execute the program for maintaining the health condition is not lowered, the likelihood of the contraction of the disease is merely increased, and the insurance premium is also merely increased. As a result, it is difficult to promote subscription to the insurance.

In addition, since when in the body information management system described in Patent Document 1, the likelihood of contraction of the disease is increased, the insurance premium is increased, the increase in the insurance premium may lead to cancellation of contract of the insurance. However, the mere cancellation of contract causes abandonment of monetary indemnity in a case where an insured person actually contracts a disease, and the insured person suffers a disadvantage in that preparation against a risk is insufficient and an insurer loses an opportunity for continuing insurance contract.

### CITATION LIST

### PATENT DOCUMENT

Patent Document 1: Japanese Patent Application Laid-Open No. 2004-005248

### SUMMARY OF THE INVENTION

### PROBLEMS TO BE SOLVED BY THE INVENTION

As to the insurance, proposition of a technology of recommending insurance appropriate for a user and the like has been demanded.

In view of the above-described circumstances, the present technology has been made and is a technology with which it is made possible to recommend appropriate insurance in which indemnity (security) (compensation) and a cost are matched.

### SOLUTIONS TO PROBLEMS

A display control apparatus or a program of the present technology is a display control apparatus including a display control unit that causes an insurance table of insurance to be displayed, the insurance detected in accordance with an evaluation value or evaluation values of the insurance preparing for a life relevant event or life relevant events related to life, the evaluation value or evaluation values calculated by using a development probability or development probabilities with which the life relevant event or life relevant events develop on a user or a program to cause a computer to function as the above-described display control apparatus.

A display control method of the present technology is a display control method which includes causing an insurance table of insurance to be displayed, the insurance detected in accordance with an evaluation value or evaluation values of the insurance preparing for a life relevant event or life relevant events related to life, the evaluation value or evaluation values calculated by using a development probability or development probabilities with which the life relevant event or life relevant events develop on a user.

In the present technology, the insurance table of the insurance detected in accordance with the evaluation value or evaluation values of the insurance preparing for the life relevant event or the life relevant events is displayed, the evaluation value or evaluation values calculated by using the development probability or development probabilities with which the life relevant event or life relevant events related to the life develop on the user.

Note that the display control apparatus may be an independent apparatus or may be internal blocks constituting one apparatus.

In addition, the program can be provided by being transmitted via a transmission medium or can be provided by being recorded in a recording medium.

### BRIEF DESCRIPTION OF DRAWINGS

Fig. 1 is a block diagram showing a configuration example of one embodiment of an insurance recommendation system to which the present technology is applied.
Fig. 2 is a block diagram showing a functional configuration example of a server 11.
Fig. 3 is a block diagram showing a functional configuration example of a client 12.
Fig. 4 is a diagram explaining a development probability p (y;i).
Fig. 5 is a flowchart explaining an example of processing in which an evaluation value V (i,j;p) of insurance j preparing for a life relevant event i is calculated.
Fig. 6 is a flowchart explaining an example of processing in which an insurance table is provided by a server 11.
Fig. 7 is a flowchart explaining an example of processing in which the insurance table is displayed by the client 12.
Fig. 8 is a diagram showing an example of a first insurance table.
Fig. 9 is a flowchart explaining an example of processing by the server 11 in a case where the first insurance table is displayed at the client 12.
Fig. 10 is a flowchart explaining an example of processing by the client 12 in a case where the first insurance table is displayed at the client 12.
Fig. 11 is a diagram showing an example of a second insurance table.
Fig. 12 is a diagram showing a first example of a third insurance table.
Fig. 13 is a diagram showing an example of rebalancing of insurance.
Fig. 14 is a diagram showing a second example of the third insurance table.
Fig. 15 is a diagram explaining a third example of the third insurance table.
Fig. 16 is a diagram showing the third example of the third insurance table.
Fig. 17 is a diagram showing an example of a fourth insurance table.
Fig. 18 is a diagram explaining an example of setting of a prediction value of a health condition of a user after execution in a case where the user has executed a health promotion program.
Fig. 19 is a block diagram showing a configuration example of one embodiment of a computer to which the present technology is applied.

### MODE FOR CARRYING OUT THE INVENTION

### <One Embodiment of Insurance Recommendation System to Which the Present Technology Is Applied>

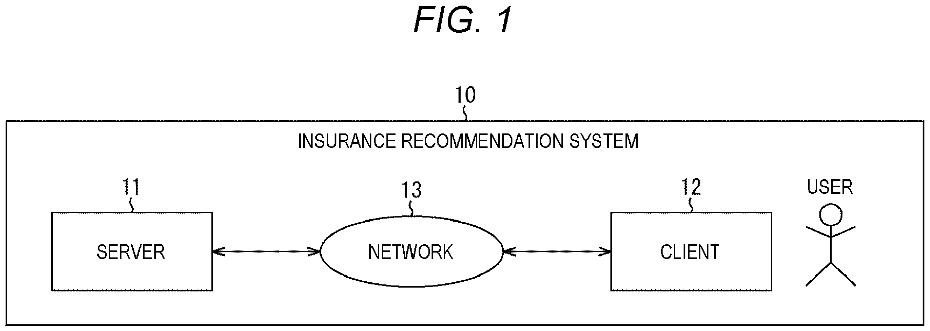

Fig. 1 is a block diagram showing a configuration example of one embodiment of an insurance recommendation system to which the present technology is applied.

In Fig. 1, the insurance recommendation system 10 has a server 11, a client 12, and a network 13.

By using information and the like transmitted via the network 13 from the client 12, the server 11 generates an insurance table of insurance preparing for life relevant events related to life.

Here, the life relevant events include life events such as a disease, injury, a disaster, death, birth of a child, school entrance of a child, vocational change, and resignation. Furthermore, the life relevant events include, for example, continuation of predetermined events of life such as being healthy and living long.

In accordance with evaluation values of insurance preparing for the life relevant events, which are calculated by using development probabilities with which the life relevant events develop on a user, the server 11 detects one or more insurance products preparing for the life relevant events and generates an insurance table of the insurance products.

Then, by transmitting and displaying the insurance table to the client 12 via the network 13, the server 11 recommends insurance appropriate for the user and the like.

In accordance with, for example, an operation made by the user, the client 12 transmits information via the network 13 to the server 11. In addition, the client 12 receives and displays the insurance table and the like transmitted via the network 13 from the server 11.

The network 13 is a network such as the Internet.

Here, insurance companies provide insurance products preparing for various life relevant events. For example, as insurance products preparing for the death, the injury, and fire as the life relevant events, there are mortality insurance, medical insurance, and fire insurance. The user (insurance subscriber) selects and subscribes (contracts) insurance which he himself or she herself thinks that the insurance is needed.

As the insurance, various kinds of insurance such as the mortality insurance and the medical insurance preparing for various life relevant events are present. Furthermore, in the same one kind of insurance such as the mortality insurance, insurance products in which insurance contents such as insurance money, insurance premiums, and ages are different are present.

It is difficult for the user to quantitatively judge and select what kind of insurance and what insurance contents are appropriate from various insurance products as described above.

In addition, for example, a tendency of a health condition of the user changes on a long-term basis. Therefore, for example, even if allocations of a plurality of insurance products are appropriate allocations for the user in a state upon purchasing the insurance products, there may be a case when the time has elapsed, such as the elapse of five years, the allocations of the plurality of insurance products are not the appropriate allocations.

In a case where the allocations of the plurality of insurance products have become inappropriate, the user can make transfer of the insurance so as to make the allocations of the plurality of insurance products appropriate for the user at the present time.

In the transfer of the insurance, the user cancels one part or all of the insurance which the user has subscribed until then and subscribes new insurance. Although depending on kinds of the contract of the insurance, a refund is paid back at the expiry of the term, in a case where the contract is cancelled halfway, in general contract, a money amount of the refund is paid back under disadvantageous conditions, as compared with a case where a refund is paid back at the expiry of the term. This worsening of conditions corresponds to a contract cancellation penalty and acts as a cost (burden) for an insured person upon the transfer of the insurance. In addition, although upon the transfer of the insurance, age has further increased upon making a contract than the age upon making the previous contract, since when the age has increased, many insurance products have nature in which occurrence probabilities of events targeted for the insurance also increases, it is often the case that in accordance with the increase in the age, an insurance premium rate increases, this also acts a cost for the insured person. As described above, in the transfer of the insurance, a predetermined cost in accordance with contract conditions is present.

Therefore, the insurance recommendation system 10 recommends appropriate insurance for the user and the like with appropriate allocations and costs added.

For example, the insurance recommendation system 10 visualizes evaluation of insurance products of various kinds and insurance contents as to a user in a current state and thus, allows the user and the like to quantitatively compare the insurance products of the various kinds and insurance contents.

In addition, for example, in order for the user to prepare for a change in a health condition in the future, even when the change in the health condition occurs, the insurance recommendation system 10 allows the user to select a plurality of insurance products which can make the total risk further small.

For example, the insurance recommendation system 10 allows the user to easily select a combination of an insurance product preparing for life relevant events in which the health condition is worsened and an insurance product preparing for life relevant events in which the health condition is improved or maintained, the combination making small the total of a risk in a case where the health condition is worsened (for example, a risk of influence exerted on life of the bereaved family by the death of a person who makes household income) and a risk in a case where the health condition is improved or maintained (for example, a risk of influence exerted on living expenses required for the remaining life by longevity).

Furthermore, for example, in a case where the change in the health condition of the user has occurred, the insurance recommendation system 10 allows the user to easily select an insurance product having insurance contents suited to the health condition after the change without reviewing the insurance by spending much labor.

In this case, even when the health condition is worsened or the health condition is improved or maintained, the user can easily select an insurance product suited to the current health condition. In addition, at that time, by offsetting an increase in an insurance premium stemming from worsening of the health condition by a reduced insurance premium in association with a longevity risk, a significant increase in an insurance premium can be suppressed. Thus, without the transfer of the insurance made by the user, the user makes only the cancellation of contract, thereby allowing a loss of losing the preparation for the risk to be suppressed.

In addition, for example, the insurance recommendation system 10 recommends a health promotion program and visualizes evaluation of insurance as to the user in the current state and evaluation of insurance as to the user in a case where the health promotion program is executed.

In this case, a user who has no will to execute the health promotion program sees the evaluation of the insurance as to the user in the current state and can thereby select appropriate insurance, and a user who has will to execute the health promotion program sees the evaluation of the insurance as to the user in a case where the user has executed the health promotion program and can thereby select appropriate insurance. Thus, it is made possible to make an insurance contract suited to a health condition in the future when the user has previously executed the health promotion program, and the user can cope with a risk for his or her state in the future without paying a transfer cost of the insurance.

### <Configuration Example of Server 11>

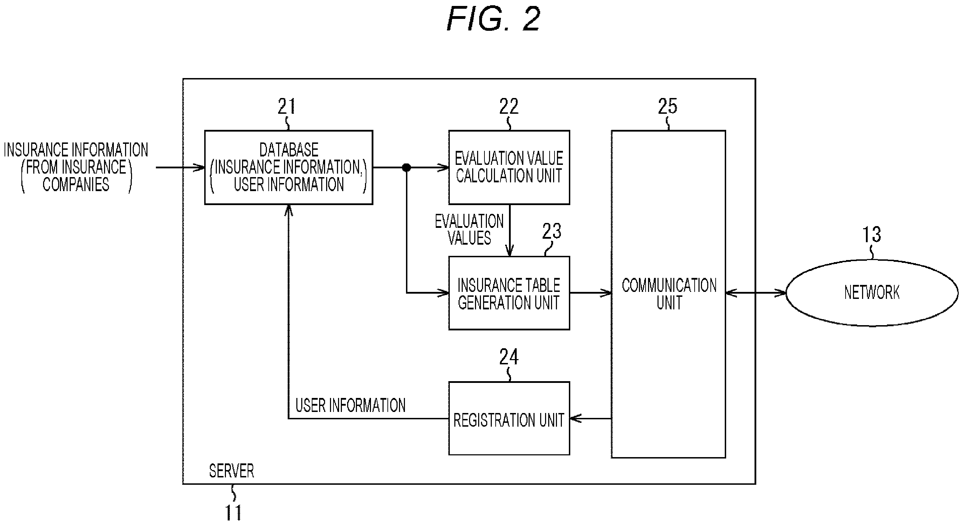

Fig. 2 is a block diagram showing a functional configuration example of the server 11.

In Fig. 2, the server 11 has a database 21, an evaluation value calculation unit 22, an insurance table generation unit 23, a registration unit 24, and a communication unit 25.

The database 21 has stored therein insurance information relating to insurance such as insurance contents of insurance products preparing for various life relevant events, which insurance companies sell. In addition, the database 21 has stored therein user information relating to a user, supplied from the registration unit 24.

By using the insurance information and the user information stored in the database 21, the evaluation value calculation unit 22 calculates a development probability p (y;i) with which a life relevant event i prepared by insurance j whose insurance information is stored in the database 21 develops in y years, for example, on a user of the client 12.

Furthermore, by using the development probability p (y;i), the evaluation value calculation unit 22 calculates an expectation value A (i,j;p) of payment of the insurance j preparing for the life relevant event i and an expectation value B (i,j;p) of refund money (the total amount of insurance money) of the insurance j.

Then, by using the expectation value A (i,j;p) and the expectation value B (i,j;p), the evaluation value calculation unit 22 calculates an evaluation value V (i,j;p) which evaluates a degree of profit (disadvantage for an insurance company) for a user of the insurance j preparing for the life relevant event i.

For example, the evaluation value calculation unit 22 calculates, as the evaluation value V (i,j;p) of the insurance j, a value showing a degree of the expectation value B (i,j;p) of the refund money with respect to the expectation value A (i,j;p) of the payment of the insurance j. The evaluation value calculation unit 22 supplies the evaluation value V (i,j;p) of each of the insurance products, whose insurance information is stored in the database 21, to the insurance table generation unit 23.

In accordance with the evaluation value V (i,j;p) from the evaluation value calculation unit 22, the insurance table generation unit 23 detects one or more insurance products preparing for the life relevant events, which are recommended to the user, generates an insurance table of the insurance products, and supplied the insurance table to the communication unit 25.

The registration unit 24 registers (stores) the user information supplied from the communication unit 25 in the database 21.

The communication unit 25 communicates with the client 12 via the network 13. The communication unit 25 receives the user information transmitted, for example, from the client 12 and supplies the user information to the registration unit 24. In addition, the communication unit 25 transmits the insurance table supplied from, for example, the insurance table generation unit 23 to the client 12.

Note that in addition to the registration of the user information transmitted from the client 12 and supplied from the communication unit 25 in the database 21, the registration unit 24 can obtain, for example, information of past illnesses and other pieces of information described in electronic medical records of the user, which are managed by a hospital, from a database of the hospital and can register, as the user information, the information of past illnesses and other pieces of information in the database 21.

In addition, the registration unit 24 can obtain, for example, an exercise history of the user and further, biological information such as a pulse and a blood pressure from a server which provides service managing the exercise history and the biological information and can register the exercise history and biological information thereof as the user information in the database 21.

### <Configuration Example of Client 12>

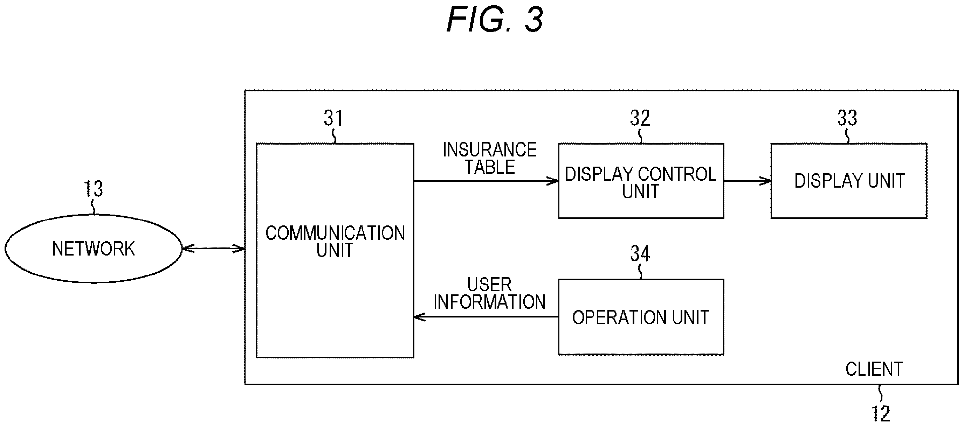

Fig. 3 is a block diagram showing a functional configuration example of the client 12.

In Fig. 3, the client 12 has a communication unit 31, a display control unit 32, a display unit 33, and an operation unit 34.

The communication unit 31 performs communication with the server 11 via the network 13. The communication unit 31 receives the insurance table transmitted from, for example, the server 11 and supplies the insurance table to the display control unit 32. In addition, the communication unit 31 transmits the user information supplied from, for example, the operation unit 34 to the server 11.

The display control unit 32 performs display control for causing the display unit 33 to display an image. The display control unit 32 causes the display unit 33 to display the insurance table from, for example, the communication unit 31.

The operation unit 34 is operated by the user, sellers who sell the insurance, and the like. For example, by operating the operation unit 34, the user inputs various pieces of information, for example, such as the user information as to the user such as attributes (age and sexuality), an occupation, a family structure, a genetic test result, and a medical examination result. The operation unit 34 supplies various pieces of information of the user information inputted by the user's operation and other pieces of information to the communication unit 31.

### <Development Probability p (y;i)>

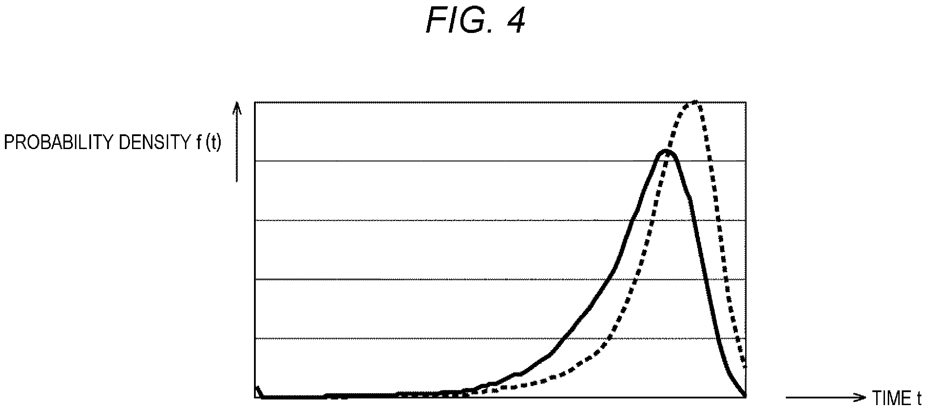

Fig. 4 is a diagram explaining a development probability p (y;i).

In the present embodiment, the development probability p (y;i) with which as to the user (insured person), the life relevant event i develops in y years is in accordance with Weibull distribution, and the development probability p (y;i) is modeled by the Weibull distribution. Note that the development probability p (y;i) can be modeled by others, instead of the Weibull distribution.

The Weibull distribution is utilized in representation of, for example, a model of survival time of matter, that is, a failure rate of the matter. For example, when the x-th power of Napier's constant e is represented like e^x, the Weibull distribution is represented by a cumulative distribution function S(t) = e^(-(λt)^p) and a probability density function f(t) = λp(λt)^(p-1)e^(-(λt)^p).

The probability density function f(t) represents, for example, a failure rate at which a failure occurs at time t, and the cumulative distribution function S(t) represents, for example, a cumulative failure rate at which the failure occurs by the time t. The probability density function f(t) is a differential of the cumulative distribution function S(t).

In the probability density function f(t), λp(λt)^(p-1) is referred to as a hazard function h(t). The hazard function h(t) = λp(λt)^(p-1) represents an instantaneous rate of mortality at which death occurs at the next time under a condition on which survival is made up to the time t. The hazard function h(t) monotonously decreases with 0 < p < 1, becomes a constant with p = 1, and monotonously increases with 1 < p.

Fig. 4 shows the probability density function f(t) = λp(λt)^(p-1)e^(-(λt)^p) as the Weibull distribution.

When λ is small, the probability density function f(t) extends to the right as indicated by a dotted line in Fig. 4. According to the Weibull distribution, in accordance with an increase in λ, for example, a probability with which a failure occurs is heightened over the entire time, and as a result, life is shortened. In addition, according to the Weibull distribution, although in accordance with an increase in p, for example, the probability with which the failure occurs hardly increases, once the increase starts, the probability sharply increases.

In the present embodiment, by using the Weibull distribution, the development probability p (y;i) is defined as a formula p(y;i) = λ(i)P(i)(λ(i)y)^(p(i)-1)e^(-(λ(i)y)^(p(i)))).

In the development probability p (y;i), λ (i) is a parameter showing easiness of development of the life relevant event i on the user (insured person) and hereinafter, is also referred to as a degree of development easiness. The degree of development easiness λ (i) is set in accordance with characteristics and a state (health condition and the like) of the user.

In a case where (it is presumed that) the life relevant event i hardly develops on the user, the degree of development easiness λ (i) is set to a relatively small value. Conversely, in a case where the life relevant event i easily develops on the user, the degree of development easiness λ (i) is set to a relatively large value.

In the development probability p (y;i) = λ (i)p(i)(λ(i)y)^(p(i)-1)e^(-(λ(i)y)^(p(i)))), p (i) is a parameter showing characteristics with which the life relevant event i develops and is previously set in accordance with the life relevant event i. For example, as to a life relevant event i classified into disaster such as fire and an accident, p (i) is set to a value close to one such that the development probability p (y;i) is flat in a direction of the time t. In addition, for example, as to a life relevant event i classified into health such as diseases, p (i) is set to a value larger than one such that the development probability p (y;i) sharply increases in accordance with a lapse of the time t.

The degree of development easiness λ (i) can be set in accordance with, for example, a formula λ (i) = λ (i, 0) + λ (i, 1) × (1) + λ (i, 2) × (2) + λ (i, 3) × (3) + λ (i, 4) × (4).

The λ (i,0), λ (i,1), λ (i,2), λ (i,3), and λ (i,4) are constants unique to life relevant events i and are previously set.

The x(1), x(2), x(3) and x(4) are set in accordance with the user information.

The x(1) shows an evaluation value of attributes of the user. As the attributes of the user, for example, there are age, sexuality, a family structure (presence or absence of a spouse), annual income, and the like of the user. It is said that as to the presence or absence of the spouse, divorce and bereavement of the spouse relate to the rest of his or her life of that person.

The x(2) shows an evaluation value of genetic characteristics of the user. As the x(2), for example, a value in accordance with an average value of differences from average values of items in a genetic test which the user has conducted by using a genetic test service can be set.

The x(3) shows an evaluation value of a diagnosis result of medical examination of the user. As the x(3), for example, a value in accordance with five-grade evaluation of an overall result of the medical examination, BMI, a blood pressure, and the like of the user can be set.

The x(4) shows an evaluation value of an action history of the user. As the x(4), for example, a value in accordance with an average value of everyday counts of a pedometer, everyday meals (a calorie intake), everyday work information (attendance and leaving/night-shift work/ overtime hours), and the like of the user can be set as the evaluation value of the action history. In addition, as the x(4), for example, a difference from an average value of evaluation values of an action history of another user whose attributes such as age and sexuality are the same as the attributes of the user (a male in his 40s and the like), a difference of an evaluation value of a current action history of the user from an evaluation value of an action history upon contracting the insurance, and the like can be set.

By using the user information of the user targeted for calculation of the development probability p (y;i), the evaluation value calculation unit 22 sets the parameters x(1) to x(4) of that user and by using the parameters x(1) to x(4), (calculates) sets the degree of development easiness λ (i) = λ (i,0) + λ (i,1) × (1) + λ (i,2) × (2) + λ (i,3) × (3) + λ (i,4) × (4) as to the life relevant events i.

Furthermore, by using the degree of development easiness λ (i) and the parameter p (i), as to the life relevant event i, the evaluation value calculation unit 22 calculates the development probability p (y;i) = λ (i)p (i)(λ (i)y)^(p (i)-1)e^(-(λ (i)y)^(p (i)))).

As described above, for example, as with a development probability p (10; death) = 0.01 with which a life relevant event in which the user dies develops in 10 years, a development probability p (5; three-major diseases) = 0.05 with which a life relevant event in which the user contracts one of three-major diseases develops in five years, and the like, the evaluation value calculation unit 22 calculates the development probability p (y;i) as to a required number of years y required for the life relevant event i.

Note that the user information is registered in the database 21; and by using the user information, the evaluation value calculation unit 22 sets the degree of development easiness λ (i) and thereafter, can appropriately update the degree of development easiness λ (i). For example, in a case where the diagnosis result of the (regular) medical examination as the user information registered in the database 21 is updated, in a case where the family structure is updated, or in a case where the exercise history is updated (for example, at the end of every month or the like), by using the user information after updating, the evaluation value calculation unit 22 can appropriately update the degree of development easiness λ (i).

### <Calculation of Evaluation Value V (i,j;p) of Insurance j>

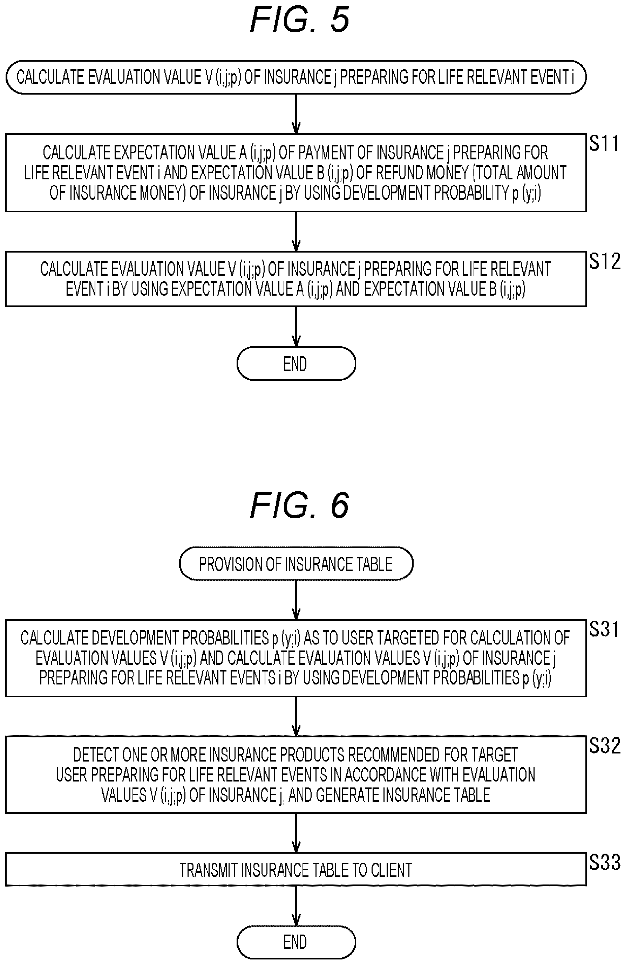

Fig. 5 is a flowchart explaining an example of processing of calculating an evaluation value V (i,j;p) of the insurance j preparing for the life relevant event i.

In step S11, the evaluation value calculation unit 22 calculates an expectation value A (i,j;p) of payment of insurance j preparing for the life relevant event i and an expectation value B (i,j;p) of refund money of the insurance j by using the development probability p (y;i), and the processing proceeds to step S12.

The evaluation value calculation unit 22 calculates the expectation value A (i,j;p) of the payment of the insurance j preparing for the life relevant event i, for example, in accordance with a formula A (i,j;p) = Σ{y ∈ payment period}(p(y;i) × y × an annual amount of insurance premiums of insurance j) using the development probability p (y;i). The Σ{y ∈ payment period} shows that as to y corresponding to the payment period of the insurance premium of the insurance j, summation is carried out.

In addition, the evaluation value calculation unit 22 calculates the expectation value B (i,j;p) of the refund money of the insurance j preparing for the life relevant event i in accordance with, for example, a formula B (i,j;p) = Σ{y ∈ indemnity period}(p(y;i) × the total amount of insurance money paid in a case where the life relevant event i develops in y years), the formula using the development probability p (y;i). The Σ{y ∈ indemnity period} shows that as to y corresponding to the indemnity period of the insurance j, summation is carried out.

In step S12, the evaluation value calculation unit 22 calculates the evaluation value V (i,j;p) of the insurance j preparing for the life relevant event i by using the expectation value A (i,j;p) and the expectation value B (i,j;p), and the processing ends.

The evaluation value calculation unit 22 calculates, for example, a difference E (i,j;p) = B (i,j;p)-A (i,j;p) of the expectation value B (i,j;p) with respect to the expectation value A (i,j;p) and a magnitude (gain) G (i,j;p) = B (i,j;p)/A (i,j;p) of the expectation value B (i,j;p) with respect to the expectation value A (i,j;p) as the evaluation value V (i,j;p) of the insurance j. As the evaluation value V (i,j;p) of the insurance j, whether either of the difference E (i,j;p) and the gain G (i,j;p) is adopted can be set, for example, in accordance with an operation of the user and the like.

In accordance with the evaluation value V (i,j;p) of the insurance j calculated as described above, the insurance table generation unit 23 detects one or more insurance products preparing for the life relevant events as appropriate insurance products recommended for the user and generates an insurance table of the one or more insurance products.

The evaluation value V (i,j;p) varies depending on the development probability p (y;i), and the development probability p (y;i) varies depending on the health condition and the like of the user as the user information. Accordingly, when the health condition and the like of the user change, the insurance products appropriate and recommended for the user by the insurance table change.

For example, as to annuity insurance j for which payment of an insurance premium is finished in up to 20 years and with which in each of the 25-th and subsequent years, the user can receive insurance money as long as the user is alive, an expectation value A (i,j;p) of payment is represented by a formula A (i,j;p) = Σ{y<=20}(p(y; death) × y × an annual amount of insurance premiums of annuity insurance j), and an expectation value B (i,j;p) of refund money is represented by a formula B (i,j;p) = Σ{y>=25}(p(y; death) × max(0,y-25) × an annual amount of insurance money of the annuity insurance j). The max(A,B) shows that larger one of A and B is taken.

As to the above-described annuity insurance j, when as a life relevant event i for which the annuity insurance j prepares, for example, a development probability p (y; death) takes a large value in a case where a number of years y in which death develops is large, the expectation value B (i,j;p) of the refund money of the annuity insurance j easily becomes larger than the expectation value A (i,j;p) of the payment.

Accordingly, as to the annuity insurance j, the later (the larger) the expectation value of the number of years y in which the death develops is, that is, for example, the healthier the user is, the larger the evaluation value V (i,j;p) becomes.

In addition, for example, as to mortality insurance j for which payment is finished in up to 20 years, an expectation value A (i,j;p) of the payment is represented by a formula A (i,j;p) = Σ{y<=20}(p(y; death) × y × an annual amount) insurance premiums of the mortality insurance j), and an expectation value B (i,j;p) of refund money is represented by a formula B (i,j;p) = Σ{y=years in which death develops}(p(y; death) × insurance money of mortality insurance j) = a fixed amount.

As to the above-described mortality insurance j, when as a life relevant event i for which the mortality insurance j prepares, for example, a development probability p (y; death) takes a large value in a case where a number of years y in which the death develops is small, the expectation value B (i,j;p) of the refund money of the mortality insurance j easily becomes larger than the expectation value A (i,j;p) of the payment.

Accordingly, as to the mortality insurance j, the earlier (the smaller) the expectation value of the number of years y in which the death develops is, that is, for example, the unhealthier the user is, the larger the evaluation value V (i,j;p) becomes.

In accordance with the evaluation value V (i,j;p) as described above, the insurance table generation unit 23 generates the insurance table of the insurance products appropriate and recommended for the user.

The insurance table generation unit 23, for example, as the first insurance table, visualizes the evaluation value V (i,j;p) as evaluation of the insurance j preparing for the life relevant event i and generates an insurance table of insurance products appropriate and recommended for the user.

In addition, the insurance table generation unit 23, for example, as a second insurance table, visualizes, as evaluation of a combination of a plurality of insurance products preparing for a plurality of life relevant events, evaluation values V (i,j;p) of the plurality of insurance products and generates an insurance table of the combination of a plurality of insurance products appropriate and recommended for the user.

Furthermore, the insurance table generation unit 23 generates, for example, as a third insurance table, an insurance table which prompts rebalancing of the insurance after subscription (contract) in accordance with an evaluation value V (i,j;p) of insurance j.

In addition, the insurance table generation unit 23 generates, for example, as a fourth insurance table, an insurance table which prompts execution of health promotion programs.

### <Provision of Insurance Table by Server 11>

Fig. 6 is a flowchart explaining an example of processing of provision of an insurance table by the server 11.

In step S31, in response to a request from, for example, the client 12, the evaluation value calculation unit 22 of the server 11 (Fig. 2) calculates development probabilities p (y;i) as to a user targeted for calculation of the evaluation values V (i,j;p) by using the insurance information and the user information stored in the database 21. Furthermore, the evaluation value calculation unit 22 calculates evaluation values V (i,j;p) of the insurance j preparing for life relevant events i by using the development probabilities p (y;i) and supplies the evaluation values V (i,j;p) to the insurance table generation unit 23, and the processing proceeds to step S32.

In step S32, in accordance with the evaluation values V (i,j;p) from the evaluation value calculation unit 22, the insurance table generation unit 23 detects one or more insurance products preparing for the life relevant events, recommended for the user and generates an insurance table of the one or more insurance products. The insurance table generation unit 23 supplies the insurance table to the communication unit 25, and the processing proceeds from step S32 to step S33.

In step S33, by transmitting the insurance table supplied from the insurance table generation unit 23 via the network 13 to the client 12, the communication unit 25 provides the client 12 with the insurance table, and the processing ends.

### <Display of Insurance Table by Client 12>

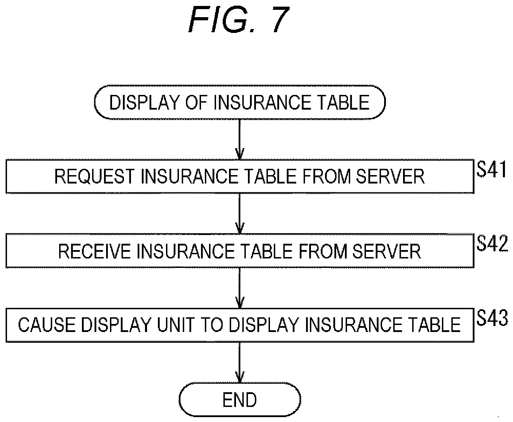

Fig. 7 is a flowchart explaining an example of processing of display of the insurance table by the client 12.

In step S41, for example, in accordance with an operation of the operation unit 34 by a targeted user and the like, the communication unit 31 of the client 12 transmits a request of the insurance table as to the targeted user to the server 11, and the processing proceeds to step S42.

In step S42, the communication unit 31 waits for the transmission of the insurance table via the network 13 from the server 11 and receives the insurance table. The communication unit 31 supplies the insurance table to the display control unit 32, and the processing proceeds from step S42 to step S43.

In step S43, the display control unit 32 causes the display unit 33 to display the insurance table from the communication unit 31, and the processing ends.

As described above, by displaying the insurance table generated by the server 11, for example, the client 12 recommends the insurance products appropriate for the user.

### <First Insurance Table>

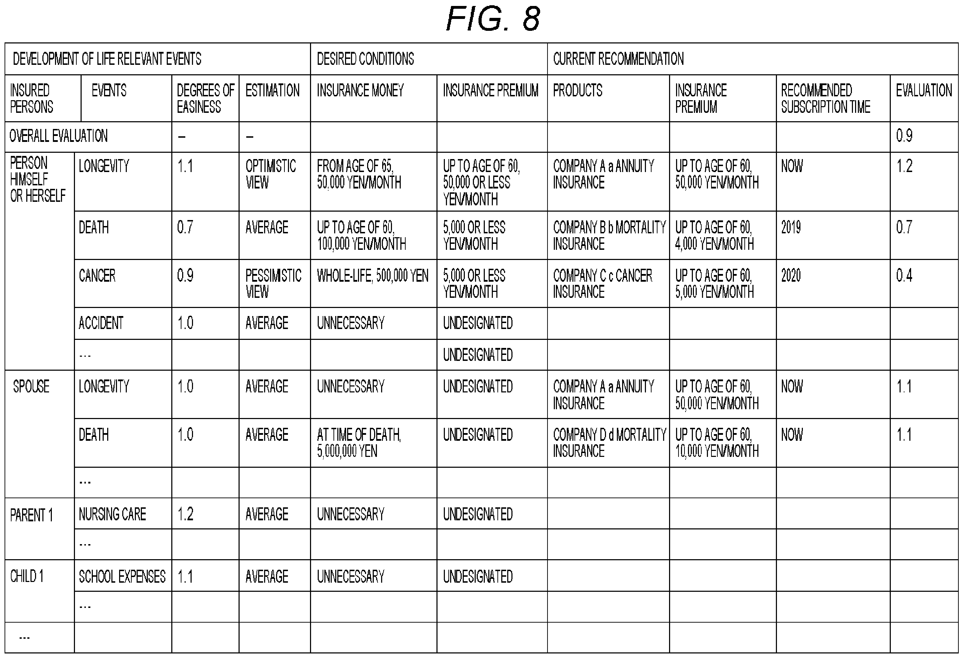

Fig. 8 is a diagram showing an example of the first insurance table.

As described with reference to Fig. 5, the first insurance table is an insurance table which visualizes, as the evaluation, the evaluation values V (i,j;p) of the insurance j preparing for the life relevant events i and recommends the insurance products appropriate for the user.

The first insurance table includes sections (columns) of "development of life relevant events", "desired conditions", and "current recommendation" and a section (row) of "overall evaluation".

The "development of life relevant events" includes sections (columns) of "insured persons", "events", "degrees of easiness", and "estimation", and pieces of information pertinent to the development of life relevant events are arranged (displayed).

The "insured persons" shows persons targeted for the insurance. In the first insurance table in Fig. 8, besides a targeted user himself or herself, a spouse, a parent, a child, and the like of the targeted user are arranged as insured persons.

The "events" shows the life relevant events. In the "events", for example, among life relevant events which are prepared by insurance products sold by insurance companies, life relevant events which are prepared by insurance products whose evaluation values V (i,j;p) arranged in the later-described "evaluation" exceed a threshold value are arranged.

The "degrees of easiness" shows degrees of development easiness λ (i) of corresponding life relevant events i. In Fig. 8, the "degrees of easiness" are, for example, degrees of development easiness λ (i) of life relevant events i of the insured persons in a case where an average value of the degrees of development easiness λ (i) of the life relevant events i for all insured persons (all users whose pieces of user information are registered in the database 21) is 1.0, that is, normalized values which are obtained by normalizing the degrees of development easiness λ (i) of the life relevant events i for the insured persons by the average value of the degrees of development easiness λ (i) of the life relevant events i for all the insured persons.

That each of the degrees of development easiness λ (i) arranged in the "degrees of easiness" is large shows that the corresponding life relevant event i easily develops. Distribution (probability density function f(t)) of development probabilities p (y;i) calculated by using the degrees of development easiness λ (i) can be linked to the degrees of development easiness λ (i) (normalized value thereof) arranged in the "degrees of easiness".

In a case where any degree of development easiness λ (i) in the "degrees of easiness" is selected, the distribution of development probabilities p (y;i) linked to that degree of development easiness λ (i) can be displayed. In a case where there is a sufficient display space, irrespective of the selection of the degree of development easiness λ (i), the distribution of the development probabilities p (y;i) linked to that degree of development easiness λ (i) can be displayed.

The "estimation" shows prediction of the user with respect to development of a corresponding life relevant event. In the "estimation", for example, an "optimistic view", a "pessimistic view", or an "average" are arranged.

The "optimistic view" shows prediction of the user that a corresponding life relevant event would hardly develop on the insured person. The "pessimistic view" shows prediction of the user that a corresponding life relevant event would easily develop on the insured person. The "average" shows prediction of the user that development of a corresponding life relevant event is average.

A value in the "degrees of easiness" corresponding to the "optimistic view" is adjusted to a value obtained by subtracting a predetermined value from a true value of the degree of development easiness λ (i)(the normalized value thereof). A value in the "degrees of easiness" corresponding to the "pessimistic view" is adjusted to a value obtained by adding a predetermined value to a true value of the degree of development easiness λ (i). In the "estimation", for example, the "average" is arranged by default, and in accordance with an operation of the user, the "average" can be changed to the "optimistic view" or the "pessimistic view".

The calculation of the development probabilities p (y;i) can be made by using the degrees of development easiness λ (i) before or after the adjustment.

The "desired conditions" includes sections (columns) of the "insurance money" and the "insurance premium", and conditions which the user desires with respect to the insurance preparing for the life relevant events are arranged.

In the "insurance money", in accordance with an operation of the user and the like, a money amount of the insurance money, reception time (a period) of the insurance money, and the like are arranged. For example, "from the age of 65, 50,000 yen/month" shows that the insured person receives insurance money of 50,000 yen each month after the age of 65. In addition, for example, "up to the age of 60 and thereafter, 100,000 yen/month" shows that in a period in which the insured person receives insurance money of 100,000 yen each month in a period until the age of 60. The "unnecessary" shows that insurance preparing for a corresponding life relevant event is unnecessary for the user.

In the "insurance premium", in accordance with and operation of the user, a money amount of the insurance premium, payment time (a period) of the insurance premium, and the like are arranged. For example, "up to the age of 60, 50,000/month or less" shows that payment of the insurance premium is made until the insured person is 60 years old and a monthly insurance premium is 50,000 yen or less. In addition, for example, "5,000 yen or less" shows that a monthly insurance premium is 5,000 yen or less. The "undesignated" shows that there was no designation by the user (no input of information).

The "current recommendation" includes sections (columns) of "products", an "insurance premium", "recommended subscription time", and "evaluation", and pieces of information of insurance recommended for the user as the insurance preparing for the life relevant events are arranged.

In the "products", as insurance preparing for the life relevant events, specific insurance recommended for the user (insurance companies selling the insurance, insurance product names, and the like) are arranged.

In the "insurance premium", a money amount of an insurance premium of insurance, payment time (a period) of the insurance premium, and the like of the insurance products arranged in the "products" are arranged.

In the "recommended subscription time", as time at which subscription to the insurance arranged in the "products" is made, subscription time appropriate for the user is arranged. For the insurance j, the appropriate joining time for the user may be, for example, the expectation value A (i, j; p) of the payment amount that maximizes the evaluation value V (i, j; p) of the insurance j = Σ {y ∈ payment period} (p (y; i) × y × the annual amount of the insurance premium of the insurance j).

In the "evaluation", evaluation values V (i,j;p) of the insurance products arranged in the "products" are arranged.

In the "overall evaluation", overall evaluation values obtained by integrating the evaluation values V (i,j;p) arranged in the "evaluation", for example, an average value of the evaluation values V (i,j;p) arranged in the "evaluation" and the like are arranged.

In the insurance table, as to the pieces of information arranged (inputted) in accordance with the operation of the user, the user can input the pieces of information to the insurance table, and in addition thereto, for example, as a part of the pieces of user information, the user can previously input by an operation of the operation unit 34, and other inputting can be made.

As to the life relevant events i arranged in the "events", the insurance table generation unit 23 arranges the products of the insurance j preparing for the life relevant events i in ascending order of the evaluation values V (i,j;p) and detects insurance ranking first in the evaluation values V (i,j;p) (insurance whose insurance evaluation value V (i,j;p) is the best) j.

Then, the insurance table generation unit 23 generates the first insurance table in which as to the life relevant events i arranged in the "events", the insurance j ranking first in the evaluation values V (i,j;p) is arranged, that is, the first insurance table in which the insurance j ranking first in the evaluation values V (i,j;p) is arranged in the "current recommendation".

Note that as to the insurance preparing for the life relevant events with the "desired conditions" arranged, that is, kinds of insurance in which the user designates the "desired conditions", the insurance table generation unit 23 can detect the insurance j ranking first in the evaluation values V (i,j;p) (the insurance j with the best evaluation values V (i,j;p)) from among the insurance products which satisfy the "desired conditions" (predetermined conditions) designated by the user. As the "desired conditions", besides the above-described money amount of insurance money and the like, insurance companies and the like can be specified.

In addition, besides the insurance j ranking first in the evaluation values V (i,j;p), the insurance table generation unit 23 can arrange pieces of information of insurance products ranking second therein and thereafter to predetermined order in the first insurance table.

Furthermore, as to the insurance j preparing for the life relevant events i arranged with the "unnecessary" in the "insurance money" in the "desired conditions", the insurance table generation unit 23 is capable of not arranging the insurance ranking first in the evaluation values V (i,j;p) in the first insurance table.

However, for example, even when the insurance j preparing for the life relevant events i is arranged with the "unnecessary" in the "insurance money" of the "desired conditions", in a case where an evaluation value V (i,j;p) of the insurance ranking first in the evaluation values V (i,j;p) exceeds a threshold value, the insurance ranking first in the evaluation values V (i,j;p) can be arranged in the first insurance table. In a case where as to the insurance j preparing for the life relevant event i with the "unnecessary" arranged in the "insurance money" of the "desired conditions", the insurance ranking first in the evaluation value V (i,j;p) is arranged in the first insurance table, it is possible to include the evaluation value V (i,j;p) of that insurance in the calculation of the overall evaluation values arranged in the "overall evaluation" or it is also possible not to include the evaluation value V (i,j;p) of that insurance therein.

In addition, in the first insurance table, in the "current recommendation", presence/absence of option of increasing or decreasing an amount of the insurance money after subscription of the insurance and the like can be further arranged.

As described above, since in the insurance table, the insurance detected in accordance with the evaluation value of the insurance preparing for the life relevant event, calculated by using the development probability, for example, the insurance ranking first in the evaluation value V (i,j;p) as to the life relevant events arranged in the "events" is arranged, as the insurance preparing for the life relevant events, the insurance appropriate for the user can be recommended.

Furthermore, since in the insurance table, the evaluation values V (i,j;p) of the insurance are included, that is, the evaluation of the insurance is visualized by numerical values as the evaluation values V (i,j;p), the user can quantitatively evaluate the insurance by the evaluation values V (i,j;p).

In addition, there may be a case where at an insurance introduction window, a plurality of kinds of insurance designated by a client (user) is compared. According to the first insurance table, different kinds of insurance, that is, insurance products preparing for different life relevant events can be quantitatively compared from one another by the evaluation values V (i,j;p).

Furthermore, the evaluation value V (i,j;p) varies depending on the development probability p (y;i), and the development probability p (y;i) varies depending on the health condition of the user and the like. Accordingly, in the first insurance table, in accordance with the health condition of the user and the like, the insurance appropriate for the user under the health condition and the like is arranged, the insurance products can be quantitatively compared from one another by the evaluation values V (i,j;p).

In addition, since in the first insurance table, the "recommended subscription time" is arranged, the user can recognize appropriate time of the subscription of the insurance.

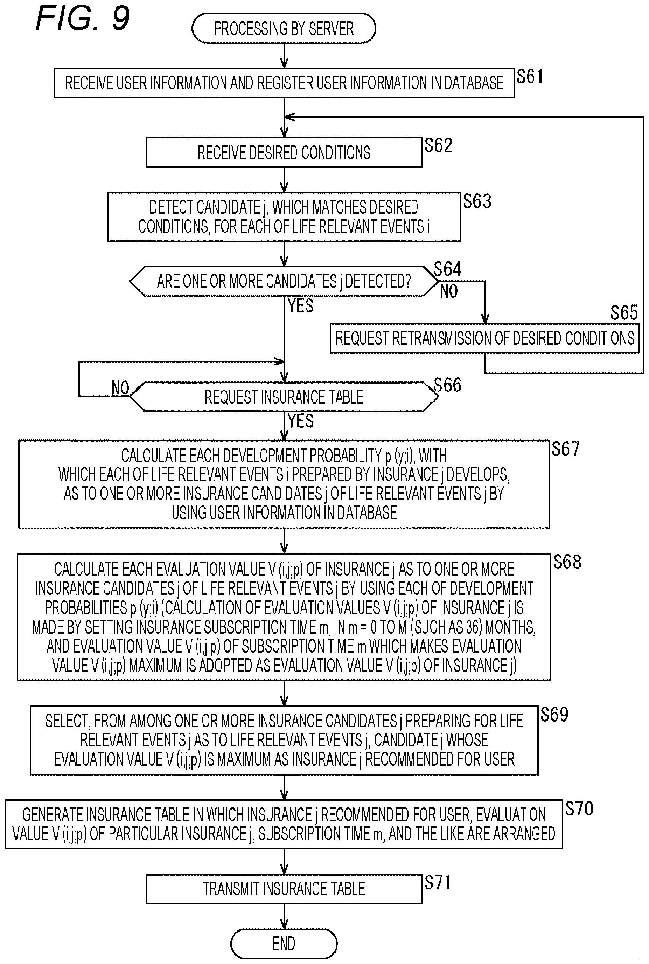

Fig. 9 is a flowchart explaining an example of processing by the server 11 in a case where the first insurance table is displayed at the client 12.

In step S61, the server 11 waits for transmission of the user information from the client 12 and receives the user information by the communication unit 25. Furthermore, the server 11 registers the user information from the client 12 in the database 21 by the registration unit 24, and the processing proceeds from step S61 to step S62.

In step S62, the server 11 waits for transmission of conditions of insurance, which the user desires (hereinafter, also simply referred to as desired conditions), from the client 12 and receives the desired conditions by the communication unit 25, and the processing proceeds to step S63.

In step S63, the server 11 detects, from the database 21, an insurance candidate j, which matches the desired conditions, on the evaluation value calculation unit 22 for each of the life relevant events i, and the processing proceeds to step S64.

In step S64, the evaluation value calculation unit 22 determines whether one or more insurance candidates j are detected in step S63.

In step S64, in a case where it is determined that no insurance candidate j is detected, the processing proceeds to step S65.

In step S65, the server 11 transmits, from the communication unit 25, a retransmission request which requests retransmission of the desired conditions from the client 12. Then, the processing returns from step S65 to step S62, and then, the similar processing is repeated.

In addition, in step S64, in a case where it is determined that the insurance candidate j or insurance candidates j are detected, the processing proceeds to step S66.

In step S66, the server 11 determines whether an insurance table request, which requests an insurance table, has been transmitted from the client 12 and in a case where it is determined that no insurance table request has been transmitted, the processing returns to step S66.

In addition, in a case where in step S66, it is determined that the insurance table request has been transmitted from the client 12, the processing proceeds to step S67.

In step S67, by using user information (user information of a user of the client 12 who has transmitted the insurance table request) in the database 21, the server 11 calculates, on the evaluation value calculation unit 22, each development probability p (y;i), with which each of life relevant events i prepared by the insurance j develops, as to one or more insurance candidates j of the life relevant events i, and the processing proceeds to step S68.

In step S68, the server 11 calculates, on the evaluation value calculation unit 22, each evaluation value V (i,j;p) of the insurance j as to one or more insurance candidates j of the life relevant events i by using each of the development probabilities p (y;i).

The calculation of each of the evaluation values V (i,j;p) of the insurance j in step S68 is made by setting insurance subscription time m, in m=0 to M (for example, M=36 or the like) months, and an evaluation value V (i,j;p) of the subscription time m which maximizes the evaluation value V (i,j;p) is adopted as the evaluation value V (i,j;p) of the insurance j.

The evaluation value calculation unit 22 supplies each of the evaluation values V (i,j;p) of the insurance j as to one or more insurance candidates j of the life relevant events i to the insurance table generation unit 23, and the processing proceeds from step S68 to step S69.

In step S69, on the insurance table generation unit 23, the server 11 selects, from among one or more insurance candidates j preparing for the life relevant events i as to the life relevant events i, candidates j whose evaluation values V (i,j;p) are maximum as insurance j recommended for the user, the processing proceeds to step S70. Note that in step S69, among the candidates j whose evaluation values V (i,j;p) are maximum, candidates j whose evaluation values V (i,j;p) are equal to or more than a threshold value can be selected as the insurance j recommended for the user.

In step S70, on the insurance table generation unit 23, the server 11 generates the first insurance table in which the insurance j recommended for the user, which is selected in step S69, the evaluation values V (i,j;p) of the insurance j, the subscription time m, and the like are arranged, and the processing proceeds to step S71.

In step S71, on the communication unit 25, the server 11 transmits the first insurance table generated in step S70 to the client 12 who has transmitted the insurance table request, and the processing ends.

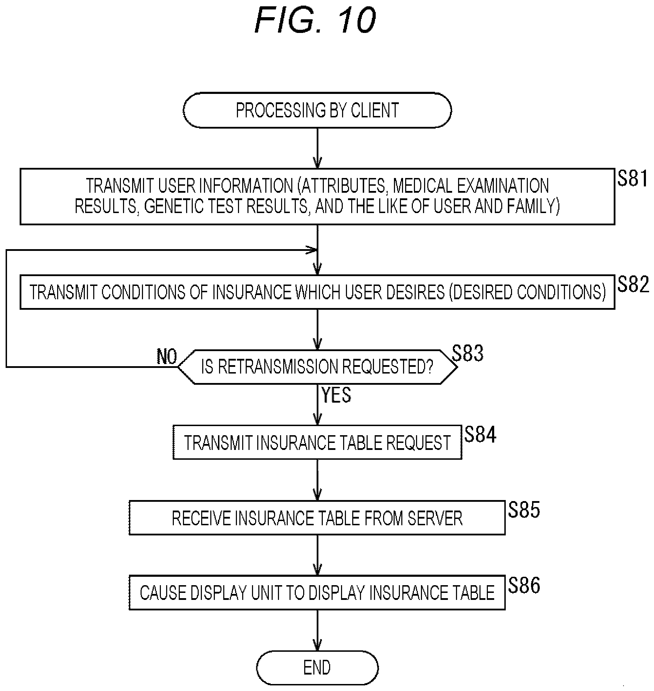

Fig. 10 is a flowchart explaining an example of processing by the client 12 in a case where the first insurance table is displayed at the client 12.

In step S81, on the communication unit 31, the client 12 waits for inputting of user information (attributes, medical examination results, genetic test results, and the like of the user and a family), which is made by operating the operation unit 34 by the user and transmits the user information to the server 11, and the processing proceeds to step S82.

In step S82, on the communication unit 31, the client 12 waits for inputting of desired conditions, which is made by operating the operation unit 34 by the user, and transmits the desired conditions to the server 11, and the processing proceeds to step S83.

In step S83, the client 12 determines whether a retransmission request has been transmitted from the server 11, and in a case where it is determined that the retransmission request has been transmitted, the processing returns to step S82 and the client 12 wait for inputting of other desired conditions by the user, and the similar processing is repeated.

In addition, in step S83, in a case where it is determined that no retransmission request has been transmitted from the server 11, the processing proceeds to step S84.

In step S84, the client 12 wait for operation of the operation unit 34 by the user so as to request the first insurance table and on the communication unit 31, transmits an insurance table request to request the insurance table to the server 11, and the processing proceeds to step S85.

In step S85, the client 12 waits for transmission of the first insurance table from the server 11 in response to the insurance table request transmitted in step S84 and on the communication unit 31, receives the first insurance table, and the processing proceeds to step S86.

In step S86, on the display control unit 32, the client 12 causes the display unit 33 to display the first insurance table received in step S85, and the processing ends.

### <Second Insurance Table>

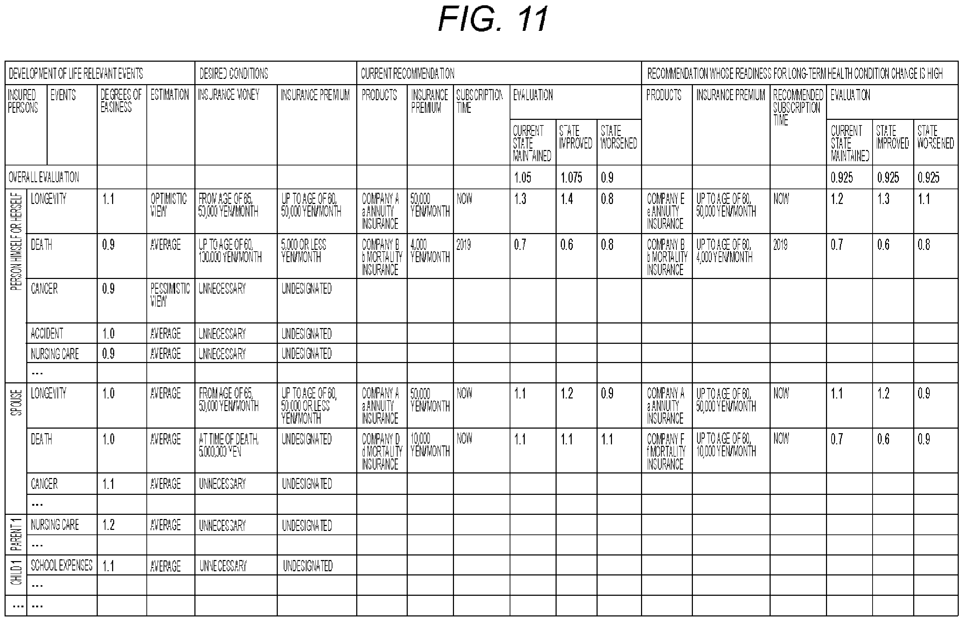

Fig. 11 is a diagram showing an example of a second insurance table.

As described with reference to Fig. 5, the second insurance table is an insurance table in which evaluation values V (i,j;p) of a plurality of insurance products are visualized as evaluation of a combination of the plurality of insurance products preparing for a plurality of life relevant events and a combination of appropriate plurality of insurance products is recommended for the user.

The second insurance table includes sections (columns) of "development of life relevant events", "desired conditions", "current recommendation" and "recommendation whose readiness for long-term health condition change is high" and a section (row) of "overall evaluation".

In the second insurance table, the "development of life relevant events", the "desired conditions", the "current recommendation", and the "overall evaluation" are similar to those in the first insurance table (Fig. 8). However, in the second insurance table, the "evaluation" of the "current recommendation" includes sections (columns) of "current state maintained", "state improved", and "state worsened", the second insurance table is different from the first insurance table in that the above-mentioned sections (columns) are not included in the "evaluation".

In the "current state maintained", degrees of development easiness λ (i) in a case where a health condition of an insured person remains in a current state and further, evaluation values V (i,j;p) of the insurance arranged in the "products", which are calculated by using development probabilities p (y;i), are arranged.

In the "state improved", degrees of development easiness λ (i) in a case where the health condition of the insured person is improved from the current state and further, evaluation values V (i,j;p) of the insurance arranged in the "products", which are calculated by using the development probabilities p (y;i), are arranged.

In the "state worsened", degrees of development easiness λ (i) in a case where the health condition of the insured person is worsened from the current state and further, evaluation values V (i,j;p) of the insurance arranged in the "products", which are calculated by using the development probabilities p (y;i), are arranged.

Accordingly, according to the second insurance table, as to the case where the health condition thereof remains in the current state, the case where health condition thereof is improved, and the case where health condition thereof is worsened, the user can quantitatively determines merits and demerits of the insurance in a current state by the evaluation values V (i,j;p) of the insurance arranged in the "current state maintained", the "state improved", and the "state worsened" and overall evaluation values arranged in the "overall evaluation".

The "recommendation whose readiness for long-term health condition change is high" includes sections (columns) of "products", "insurance premium", "recommended subscription time", and "evaluation", and even when the health condition of the insured person comes to be in any state in the future, pieces of information of the insurance which make the total risk in a case where life relevant events prepared by subscribed insurance develop further small are arranged.

In the "recommendation whose readiness for long-term health condition change is high", among a plurality of combinations, each of which includes a plurality of insurance products which can be selected from insurance products sold by insurance companies, pieces of information of a plurality of insurance products, constituting a combination, whose each minimum value, among overall evaluation values obtained by integrating evaluation values V (i,j;p) of the plurality of insurance products, which are calculated by using development probabilities p (y;i) with respect to a health condition in the current state of the insured person and overall evaluation values obtained by integrating evaluation values V (i,j;p) of the plurality of insurance products, which are calculated by using development probabilities p (y;i) with respect to a health condition changed from the health condition of the insured person in the current state, is maximum are arranged as the insurance products which make the total risk further small.

Here, as to the plurality of combinations of the plurality of insurance products which can be selected from the insurance products sold by the insurance companies, the overall evaluation values obtained by integrating the evaluation values V (i,j;p) of the plurality of insurance products, which are calculated by using the development probabilities p (y;i) with respect to the health condition of the insured person in the current state are referred to as first overall evaluation values.

In addition, the overall evaluation values obtained by integrating the evaluation values V (i,j;p) of a plurality of insurance products, which are calculated by using development probabilities p (y;i) with respect to the health condition improved from the health condition of the insured person in the current state are referred to as second overall evaluation values.

Furthermore, overall evaluation values obtained by integrating evaluation values V (i,j;p) of a plurality of insurance products, which are calculated by using development probabilities p (y;i) with respect to a health condition worsened from the current state of the insured person are referred to as third overall evaluation values.

In the "recommendation whose readiness for long-term health condition change is high", among the plurality of combinations of the plurality of insurance products which can be selected from the insurance products sold by the insurance companies, pieces of information of a plurality of insurance products, constituting a combination, whose each minimum value, among the first overall evaluation values, the second overall evaluation values, and the third overall evaluation values, is maximum are arranged.

The "products", the "insurance premium", and the "recommended subscription time" in the "recommendation whose readiness for long-term health condition change is high" are similar to the "products", the "insurance premium", and the "recommended subscription time" in the "current recommendation", respectively.

The "evaluation" in the "recommendation whose readiness for long-term health condition change is high" includes sections (columns) of "current state maintained", "state improved", and "state worsened".

In the "evaluation" of the "recommendation whose readiness for long-term health condition change is high", the "current state maintained", the "state improved", and the "state worsened" are similar to the "current state maintained", the "state improved", and the "state worsened" in the "evaluation" of the "current recommendation".

In columns of the "current state maintained", the "state improved", and the "state worsened" of the "evaluation" in each of the "current recommendation" and the "recommendation whose readiness for long-term health condition change is high", overall evaluation values arranged in rows of the "overall evaluation" are first overall evaluation values, second overall evaluation values, and third overall evaluation values.

In the "current recommendation" of the first insurance table, as to life relevant events i, information of insurance j whose evaluation value V (i,j;p) ranks first is arranged.

On the other hand, in the "recommendation whose readiness for long-term health condition change is high" of the second insurance table, among the plurality of combinations of the plurality of insurance products which can be selected from the insurance products sold by the insurance companies, pieces of information of the combination constituted by the plurality of insurance products, whose minimum value, among the first overall evaluation values, the second overall evaluation values, and the third overall evaluation values, are maximum are arranged.

Therefore, in a case where the second insurance table is generated, on the insurance table generation unit 23, for example, as to the plurality of combinations of the plurality of insurance products which can be selected from the insurance products sold by the insurance companies, evaluation values V (i,j;p) of the plurality of insurance products constituting each of the combinations of insurance products are calculated, and by using the evaluation values V (i,j;p), the first overall evaluation values, the second overall evaluation values, and the third overall evaluation values are calculated.

Then, from among the plurality of combinations of the insurance products, a combination of insurance products, whose minimum value, among the first overall evaluation values, the second overall evaluation values, and the third overall evaluation values, are maximum is detected as a combination of insurance products which makes the total risk further small (hereinafter, also referred to as a total risk minimum combination).

In the "recommendation whose readiness for long-term health condition change is high", in the "products", insurance products constituting the total risk minimum combination are arranged in rows of life relevant events prepared by the insurance products.

In the "recommendation whose readiness for long-term health condition change is high", in the "insurance premium", a money amount of an insurance premium of each of the insurance products arranged in the "products" and payment time (period) of the insurance premium and the like are arranged.

In the "recommendation whose readiness for long-term health condition change is high", in the "recommended subscription time", as time at which subscription of the insurance products arranged in the "products" is made, subscription time appropriate for the user is arranged.

In the "recommendation whose readiness for long-term health condition change is high", in the "current state maintained" of the "evaluation", evaluation values V (i,j;p) of the insurance products arranged in the "products", which are calculated by using development probabilities p (y;i) with respect to the health condition of the insured person in the current state, are arranged.

In the "recommendation whose readiness for long-term health condition change is high", in the "state improved" of the "evaluation", evaluation values V (i,j;p) of the insurance products arranged in the "products", which are calculated by using development probabilities p (y;i) with respect to the health condition improved from the health condition of the insured person in the current state, are arranged.

In the "recommendation whose readiness for long-term health condition change is high", in the "state worsened" of the "evaluation", evaluation values V (i,j;p) of the insurance products arranged in the "products", which are calculated by using development probabilities p (y;i) with respect to the health condition worsened from the health condition of the insured person in the current state, are arranged.

In the "evaluation" of the "recommendation whose readiness for long-term health condition change is high", in rows of the "overall evaluation" of columns of the "current state maintained", the "state improved", and the "state worsened", first overall evaluation values, second overall evaluation values, and third overall evaluation values of the plurality of insurance products constituting the total risk minimum combination are arranged, respectively.

The total risk minimum combination constituted by the plurality of insurance products is a combination of insurance products which does not extremely worsen overall evaluation values even when the health condition of the insured person is changed in any manner in the future, that is, a combination of insurance products which suppresses worsening of the overall evaluation values to the minimum even in a case where the health condition of the insured person has changed so as to most worsen the overall evaluation values.

Accordingly, according to the second insurance table, even in a case where the health condition of the insured person has changed so as to most worsen the overall evaluation values, the combination of the plurality of insurance products which suppresses worsening of the overall evaluation values to the minimum, that is, the combination of the plurality of insurance products which makes the total risk further small can be recommended for the user.

As described above, due to the nature of the second insurance table by which the combination of the plurality of insurance products, making the total risk further small, is recommended for the user, as with a pair of insurance j1 in which the more delayed an expectation value of time at which a certain life relevant event i develops (for example, a health condition is improved and the more delayed time at which death develops is) is, the larger an evaluation value V (i,j1;p) is and insurance j2 in which the earlier an expectation value of time at which a life relevant event i develops (for example, a health condition is worsened and the earlier time at which death develops is) is, the larger an evaluation value V (i,j2;p) is, the combination of the plurality of insurance products recommended for the user is a combination which includes the pair of the insurance j1 and the insurance j2 in which even when the time at which the life relevant event i develops is delayed or becomes earlier, the total V (i,j1;p)+V (i,j2;p) of the evaluation values does not largely change.

For example, in Fig. 11, a pair of company E e annuity insurance and company B b mortality insurance which are arranged in the "recommendation whose readiness for long-term health condition change is high" corresponds to the pair of the insurance j1 and the insurance j2 and a pair of company A a annuity insurance and company F f mortality insurance arranged in the "current recommendation" corresponds thereto.

For example, when only the insurance j1 in which the more improved the health condition is, the larger the evaluation value V (i,j1;p)(for example, the annuity insurance) is subscribed, preparation in a case where the health condition is worsened is insufficient. On the other hand, when only the insurance j2 in which the more worsened the health condition is, the larger the evaluation value V (i,j2;p) becomes (for example, the mortality insurance) is subscribed, preparation in a case where the health condition is improved is insufficient.

According to the second insurance table, for example, the insurance j1 in which the more improved the health condition is, the larger the evaluation value V (i,j1;p) is and the insurance j2 in which the more worsened the health condition is, the larger the evaluation value V (i,j2;p) becomes are recommended in a well-balanced manner, thereby allowing the worst value of the total risk to be improved.

Note that in the second insurance table, as the insurance constituting the combination of the plurality of insurance products recommended for the user, besides the insurance products sold by the insurance companies, public insurance (for example, national health insurance, welfare annuity insurance, mutual-aid pension, and the like) can be included. In addition, the total risk minimum combination can be detected from the combinations of the insurance products preparing for the life relevant events in which the insurance products are arranged in "products" of the "current recommendation".

### <Third Insurance Table>

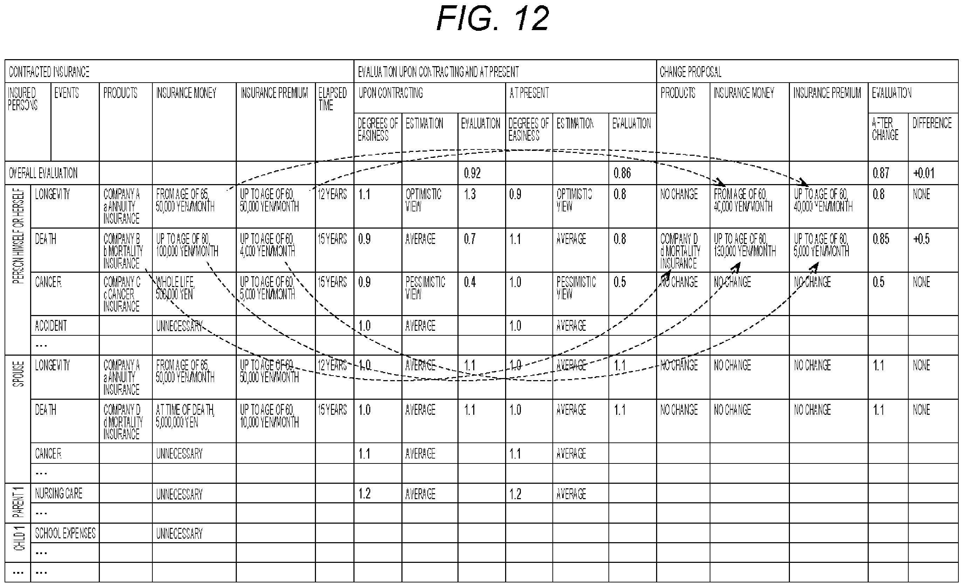

Fig. 12 is a diagram showing a first example of a third insurance table.

As described with reference to Fig. 5, the third insurance table is an insurance table which prompts rebalancing of insurance products in accordance with evaluation values V (i,j;p) of insurance j after contracting (subscription).

In Fig. 12, the third insurance table includes sections (columns) of "contracted insurance", "evaluation upon contracting and at present", and "change proposal" and a section (row) of "overall evaluation".

The "contracted insurance" includes sections (columns) of "insured persons", "events", "products", "insurance money", "insurance premium", and "elapsed time", and pieces of information of the contracted insurance are arranged.

The "insured persons" and the "events" are similar to the "insured person" and the "events" in the first insurance table (Fig. 8), respectively.

In the "products", the "insurance money", and the "insurance premium", as to the contracted insurance, pieces of information which are similar to those in the "products", the "insurance money", and the "insurance premium" in the first insurance table (Fig. 8) are arranged.

In the "elapsed time", a period of time elapsed from the time of subscription of insurance arranged in the "products", that is, a subscription period of the insurance is arranged.

By the "contracted insurance", the user can confirm currently contracted insurance products as a policyholder.

The "evaluation upon contracting and at present" includes sections (columns) of "degrees of easiness", "estimation", and "evaluation" each of upon contracting and at present.

In the "degrees of easiness" and "evaluation" upon contracting, degrees of development easiness λ (i) and evaluation values V (i,j;p) which are calculated in accordance with a state of the user (user information showing the state thereof) upon contracting are arranged.

In the "degrees of easiness" and the "evaluation" at present, degrees of development easiness λ (i) and evaluation values V (i,j;p) which are calculated in accordance with a state of the user (user information showing the state thereof) at present are arranged.

In the "estimation" upon contracting, for example, the pieces of information which are arranged in the "estimation" of the first insurance table upon contracting are arranged.

In the "estimation" at present, for example, the pieces of information which are similar to those in the "estimation" upon contracting are arranged by default, and the pieces of information by default can be changed to the "optimistic view", the "pessimistic view", or the "average" in accordance with an operation of the user.

By the "evaluation upon contracting and at present", as to the contracted insurance products, the user compares the evaluation values V (i,j;p) and the overall evaluation values upon contracting and the evaluation values V (i,j;p) and the overall evaluation values at present and can confirm change (increase and decrease) in the evaluation values V (i,j;p) and the overall evaluation values.

In Fig. 12, whereas an overall evaluation value upon contracting is 0.92, an overall evaluation value at present is 0.86, as to the contracted insurance products, it can be confirmed that a profit of the user decreases from upon contracting.

The "change proposal" includes "products", "insurance money", "insurance premium", and "evaluation", and as to the user in a state at present, one or more evaluation values V (i,j;p) of the contracted insurance and further, pieces of information of the insurance products which improve the overall evaluation values are arranged.

In the "change proposal", in the "products", the "insurance money", the "insurance premium", and the "evaluation", as to the insurance products which improve the overall evaluation values, pieces of information which are similar to those in the "products", the "insurance money", the "insurance premium", and the "evaluation" of the first insurance table (Fig. 8) are arranged, respectively.

Note that the "evaluation" of the "change proposal" includes "after change" and "difference". In the "after change", evaluation values V (i,j;p) (or overall evaluation values) of the insurance products arranged in the "products" of the "change proposal" are arranged. In the "difference", each difference between each of the evaluation values V (i,j;p) arranged in the "after change" and each of the evaluation values V (i,j;p) arranged in the "evaluation" at present is arranged.

For example, as to the life relevant events prepared by the contracted insurance products by the user, the insurance table generation unit 23 detects, as insurance after rebalancing (information) which is arranged in the "change proposal", insurance j whose evaluation value V (i,j;p), calculated as to the user in a state at present, ranks first, from among the insurance products preparing for the life relevant events.

Furthermore, in a case where overall evaluation values of the insurance products after rebalancing exceed the overall evaluation values at present, the insurance table generation unit 23 arranges pieces of information of the insurance products after rebalancing (pieces of information which are different from those of the information of the contracted insurance products arranged in the "contracted insurance") in the "change proposal", the "products", the "insurance money", the "insurance premium", and the "evaluation", thereby generating the third insurance table.

The detection of the insurance after rebalancing can be performed without limiting the insurance premiums or can also be performed by limiting the insurance premiums.

For example, the detection of the insurance products after rebalancing can be performed such that the total amount of the insurance premiums of the insurance products after rebalancing is within the total amount of the insurance premiums of the insurance products contracted by the user. In addition, for example, the detection of the insurance products after rebalancing can be performed such that the total amount of insurance premiums of new insurance products is within the total amount of the insurance premiums of the insurance products contracted by the user and the overall evaluation values of the insurance products after rebalancing are the best values.

In Fig. 12, an overall evaluation value of the insurance product after rebalancing arranged in the "change proposal" is 0.87 and the overall evaluation value is improved by 0.01 from 0.86 which is the overall evaluation value at present. In addition, in Fig. 12, as to the insurance products after rebalancing, among the contracted insurance products, the company A a annuity insurance and the company B b mortality insurance, in each of which the user himself or herself is the insured person, are changed.

In other words, in the contracted insurance, in the company A a annuity insurance in which the user himself or herself is the insured person, the "insurance money" is "from the age of 65, 50,000/month" and the "insurance premium" is "up to the age of 60 and thereafter, 50,000/month". In contrast to this, in the insurance after rebalancing, although the insurance product itself is the company A a annuity insurance, "insurance money" as the insurance contents is changed to "from the age of 60, 40,000/month" and the "insurance premium" is changed to "up to the age of 60 and thereafter, 40,000/month".

Furthermore, in the contracted insurance, the company B b mortality insurance in which the user himself or herself is the insured person is included. In contrast to this, in the insurance after rebalancing, the company B b mortality insurance is changed to company D d mortality insurance.

The insurance contents between the company B b mortality insurance and the company D d mortality insurance are different from each other. In other words, although in the contracted company B b mortality insurance, the "insurance money" is "up to the age of 60, 100,000/month" and the "insurance premium" is "up to the age of 60 and thereafter, 4,000/month", in the company D d mortality insurance after rebalancing, the "insurance money" is changed to "up to the age of 60, 130,000/month" and the "insurance premium" is changed to "up to the age of 60 and thereafter, 5,000/month".

Note that in the "change proposal", "no change" shows that no change is made from the "contracted insurance".

According to the third insurance table, since as to the user in the state at present, the insurance products whose overall evaluation values are improved are displayed, it is made possible to prompt the user to rebalance the insurance products after contracting. As a result, continuation of a state in which the state of the user at present and indemnity contents of the insurance mismatch each other can be suppressed.

The third insurance table can be presented to the user, for example, at a window or on a webserver in each of companies which provide service for advising clients on the insurance.

Note that as the insurance products arranged in the "change proposal" of the third insurance table, the insurance product themselves are left as they are, and for example, insurance products, in each of which the insurance money, the insurance contents such as the insurance premium, the payment period, and the indemnity period are changed so as to make the evaluation values V (i,j;p) large can be adopted.

In addition, in a case where among the insurance products after rebalancing, the contracted insurance product or products are included and the evaluation value or values V (i,j;p) of the contracted insurance product or products are equal to or less than a threshold value, as to the contracted insurance product or products, by the third insurance table, cancellation of contract can be recommended. In this case, so to speak, useless continuation of insurance whose profit for the user is extremely small can be suppressed.

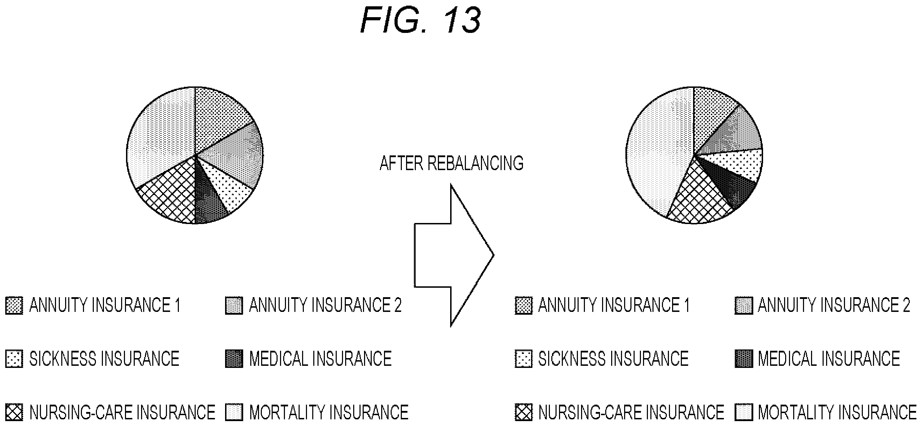

Fig. 13 is a diagram showing an example of rebalancing of the insurance products.

In Fig. 13, each circular graph shows an example of rates of insurance premiums.

In Fig. 13, in conjunction with worsening of the health condition of the user, rebalancing in which an amount of an insurance premium of each of annuity insurance 1 and annuity insurance 2 is decreased and an amount of an insurance premium of mortality insurance is increased is made.

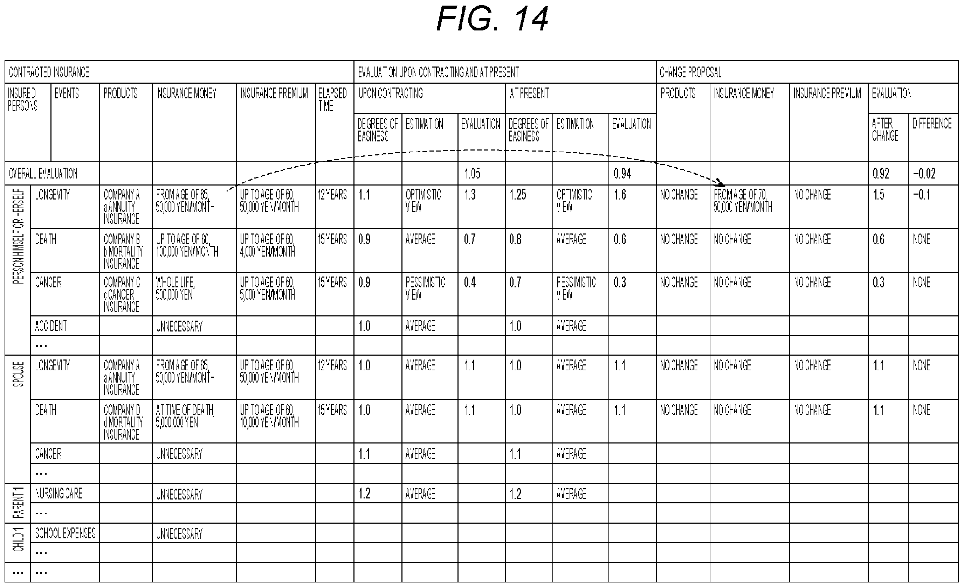

Fig. 14 is a diagram showing a second example of the third insurance table.

In Fig. 14, the third insurance table is configured in a manner similar to the manner in which the insurance table in Fig. 12 is configured.

In Fig. 14, in the "evaluation upon contracting and at present", whereas an overall evaluation value upon contracting is 1.05, an overall evaluation value at present is 0.94, and it can be confirmed that as to the contracted insurance, a profit of the user decreases from that upon contracting.

Incidentally, in Fig. 14, as to company A a annuity insurance in which an insured person is a user himself or herself and which prepares for a life relevant event "longevity", whereas an evaluation value V (longevity, a annuity insurance;p) upon contracting is 1.3, an evaluation value V(longevity, a annuity insurance;p) at present is 1.6, resulting in a dramatic increase (improvement) from upon contracting. In the present embodiment, although that the evaluation value V (longevity, a annuity insurance;p) is large is advantageous for the user, that the evaluation value V (longevity, a annuity insurance;p) is large is disadvantageous for an insurance company (here, the company A selling the a annuity insurance).

In other words, the large the evaluation value V (longevity, a annuity insurance;p) is, the larger insurance money which the user receives with respect to insurance premiums which the user pays. When as to a large number of users, the insurance money (refund money) which each of the users receives with respect to the insurance premiums (payment) which each of the users pays is increased, an insurance company goes bankrupt and as a result, that the evaluation value V (longevity, the a annuity insurance;p) is large is disadvantageous for each of the users.

Therefore, in the second example of the third insurance table, in "change proposal", as to the user in a state at present, information of insurance in which the evaluation value V (i,j;p) is limited to a predetermined value (or less) as a threshold value is arranged.

The insurance table generation unit 23 detects, as insurance after rebalancing arranged in the "change proposal", each insurance product whose evaluation value V (i,j;p) at present in the "evaluation upon contracting and at present" among the contracted insurance products does not exceed a predetermined value as a threshold value, for example, a predetermined value which an insurance company previously sets as an evaluation value at which the insurance company is highly likely to go bankrupt.

Furthermore, as to insurance whose evaluation value V (i,j;p) at present exceeds the predetermined value as the threshold value in the "evaluation upon contracting and at present" among the contracted insurance products (hereinafter, also referred to as excessive profit insurance), the insurance table generation unit 23 detects, as the insurance after rebalancing arranged in the "change proposal", each insurance j whose evaluation value V (i,j;p) calculated as to the user in the state at present is equal to or less than the predetermined value and is the closest to the predetermined value from among the insurance products preparing for each life relevant event with respect to each life relevant event prepared by the excessive profit insurance.

Then, by arranging the information of the insurance after rebalancing in the "change proposal", the insurance table generation unit 23 generates the third insurance table.

In Fig. 14, as to the insurance after rebalancing, the company A a annuity insurance in which the user himself or herself is the insured person, among the contracted insurance products, is changed since the company A a annuity insurance is the excessive profit insurance whose evaluation value V (i,j;p) at present exceeds the predetermined value as the threshold value, for example, 1.5.

In other words, although in the contracted insurance products, as to the company A a annuity insurance in which the user himself or herself is the insured person, "from the age of 65, 50,000/month" is arranged in the "insurance money", and although in the insurance after rebalancing, the insurance product itself is the company A a annuity insurance, the "insurance money" as the insurance contents is changed to "from the age of 70, 50,000/month" and reception time of the insurance money is delayed from the age of 65 to the age of 70.

As a result, in the "change proposal", the evaluation value V (i,j;p) of the company A a annuity insurance in which the user himself or herself is the insured person is a value decreased from 1.6 as the evaluation value V (i,j;p) at present in the "evaluation upon contracting and at present", that is, 1.5 which does not exceed the predetermined value as the threshold value.

As described above, in the insurance after rebalancing, the evaluation value V (i,j;p) of the company A a annuity insurance is limited to the predetermined value (or less) as the threshold value, thereby allowing bankruptcy of the insurance company, caused by excessively large insurance money received by the users, to be suppressed.

For example, when an evaluation value V (i,j;p) of annuity insurance becomes excessively large, stemming from change in social environment such as a case where life is prolonged more than expected due to rapid development of a medical technology, a risk for an insurance company becomes large, stemming from an increase in insurance money of the annuity insurance which the insurance company pays.

In this case, the insurance company may go bankrupt. Alternatively, in order to lower the risk, the insurance company may increase an insurance premium. Accordingly, the risk of the insurance company becomes large, and as a result, users suffer disadvantage.

In the second example of the third insurance table, the insurance whose evaluation value V (i,j;p) is limited to the predetermined value as the threshold value is arranged in the "change proposal" as the insurance after rebalancing. Accordingly, the insurance after rebalancing arranged in the "change proposal" is recommended for the user, thereby allowing the risk of the insurance company to be suppressed. As a result, the bankruptcy of the insurance company stemming from an increase in the risk of the insurance company and a rise in the insurance premium can be suppressed.

The second example of the third insurance table can be used by sales staff who sell the insurance, instead of the user who contracts (has contracted) the insurance.

Note that although in Fig. 14, as to the insurance after rebalancing, the insurance product itself remains as the company A a annuity insurance in the current state and by delaying the reception time of the insurance money as the insurance contents, the evaluation value V (i,j;p) of the annuity insurance is limited, in addition thereto, for example, by changing the insurance contents such as changing the insurance product itself to annuity insurance other than the company A a annuity insurance, decreasing the insurance money, increasing the insurance premium, shortening an indemnity period, or prolonging a payment period if the insurance premiums, the evaluation value V (i,j;p) can be limited.

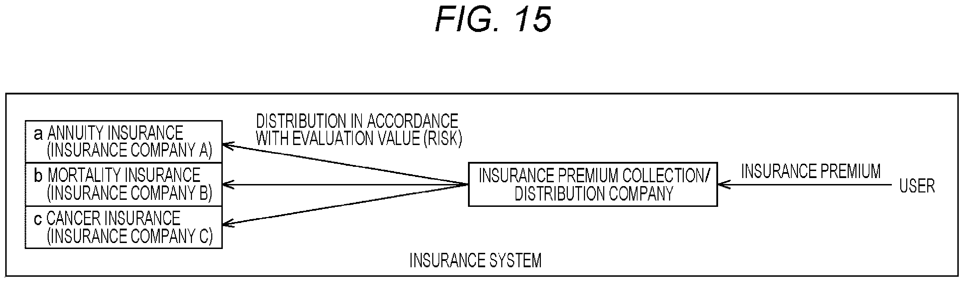

Fig. 15 is a diagram explaining a third example of the third insurance table.

Fig. 15 is a diagram showing an example of an insurance system which the third example of the third insurance table presupposes.

In the insurance system in Fig. 15, an insurance premium collection/distribution company as an organization which cross-sectionally connects a plurality of insurance companies, which are a company A, a company B, and a company C in Fig. 15, is interposed between the insurance companies and the user. The insurance premium collection/distribution company collects insurance premiums from the user and allocates the insurance premiums to the company A, the company B, and the company C. The third example of the third insurance table presupposes the insurance system as described above.

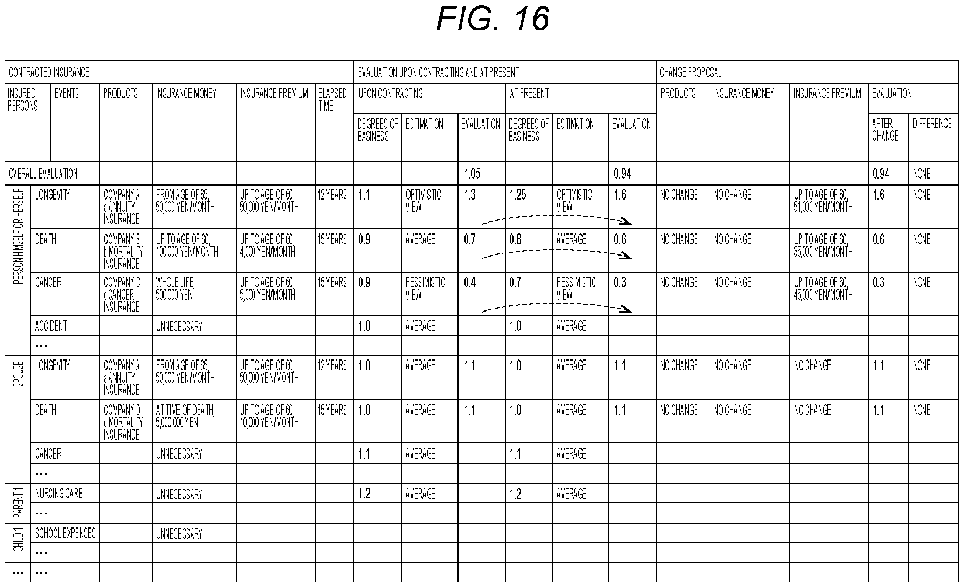

Fig. 16 is a diagram showing an example of the third example of the third insurance table.

In Fig. 16, the third insurance table is configured in a manner similar to the manner in which the insurance table in Fig. 12 is configured.

In Fig. 16, as to the company A a annuity insurance preparing for a life relevant event "longevity" in which the insured person is the user himself or herself, whereas an evaluation value V (longevity, a annuity insurance;p) upon contracting is 1.3, an evaluation value V (longevity, a annuity insurance;p) at present is 1.6 and is increased from that upon contracting.

On the other hand, as to b mortality insurance of the company B preparing for a life relevant event "death" in which the insured person is the user himself or herself, whereas an evaluation value V (death, b mortality insurance;p) upon contracting is 0.7, an evaluation value V (death, b mortality insurance;p) at present is 0.6 and is decreased from that upon contracting.

Similarly, as to c cancer insurance of the company C preparing for a life relevant event "cancer" in which the insured person is the user himself or herself, whereas an evaluation value V (cancer, c cancer insurance;p) upon contracting is 0.4, an evaluation value V (cancer, c cancer insurance;p) at present is 0.3 and is decreased from that upon contracting.

Accordingly, according to Fig. 16, among the a annuity insurance of the company A, the b mortality insurance of the company B, and the c cancer insurance of the company C, in each of which the user himself or herself is the insured person, as to the a annuity insurance of the company A, a risk of the company A at present is increased from that upon contracting.

On the other hand, as to each of the b mortality insurance of the company B and the c cancer insurance of the company C, a risk of each of the company B and the company C at present is decreased from that upon contracting.

In the third example of the third insurance table, pieces of information of the plurality of insurance products which include insurance premiums after allocation, in which the total amount of the insurance premiums of the plurality of insurance products contracted by the user is allocated to the plurality of insurance products in accordance with evaluation values of the plurality of insurance products at present, are arranged in the "change proposal".

The insurance table generation unit 23 allocates the total amount of the insurance premiums of the plurality of insurance products contracted by the user as respective insurance premiums of the plurality of insurance products in accordance with evaluation values V (i,j;p) at present in the "evaluation upon contracting and at present".

Furthermore, by arranging the pieces of information of the plurality of insurance products contracted by the user in the "change proposal", which include the insurance premiums after the allocation, the insurance table generation unit 23 generates the third insurance table.

In Fig. 16, the evaluation value V (i,j;p) of the a annuity insurance of the company A in which the user himself or herself is the insured person is increased from 1.3 to 1.6, and in the "change proposal", the insurance premium of the a annuity insurance is increased by an increase in the evaluation value V (i,j;p).

In other words, as to the a annuity insurance of the company A, although the insurance premium at present is 50,000 yen/month, the insurance premium in the "change proposal" is 51,000 yen/month.

In addition, an evaluation value V (i,j;p) of the b mortality insurance of the company B in which the user himself or herself is the insured person is decreased from 0.7 to 0.6, and in the "change proposal", the insurance premium of the b mortality insurance is decreased by a decrease in the evaluation value V (i,j;p).

In other words, as to the b mortality insurance of the company B, although the insurance premium at present is 4,000 yen/month, in the "change proposal", the insurance premium is 3,500 yen/month.

Furthermore, an evaluation value V (i,j;p) of the c cancer insurance of the company C in which the user himself or herself is the insured person is decreased from 0.4 to 0.3, and in the "change proposal", the insurance premium of the c cancer insurance is decreased by a decrease in the evaluation value V (i,j;p).

In other words, as to the c cancer insurance of the company C, although the insurance premium at present is 5,000 yen /month, the insurance premium in the "change proposal" is 4,500 yen/month.

The insurance premium collection/distribution company uses the third example of the third insurance table in the insurance system in Fig. 15 and allocates the insurance premiums collected from the user to the company A, the company B, and the company C in accordance with the insurance premiums in the "change proposal".

In this case, without changing the total amount of the insurance premiums paid by the user, the company A, the company B, and the company C can receive the insurance premiums appropriate for a risk at present.

As described above, by allocating the total amount of the insurance premiums of the plurality of insurance products contracted by the user in accordance with the evaluation values V (i,j;p) of the insurance products as the respective insurance premiums of the plurality of insurance products to the plurality of insurance products, without changing the total amount of the insurance premiums paid by the user and indemnity contents which the user receives, a risk which a single insurance company cannot bear is dispersed to the plurality of insurance companies and an upper limit of the risk for the insurance companies can be lowered.

Note that in Fig. 16, due to the improvement of the health condition of the user, the evaluation value V (i,j;p) of the a annuity insurance of the company A is increased, and the evaluation values V (i,j;p) of the b mortality insurance of the company B and the c cancer insurance of the company C are decreased, and as a result, in the "change proposal", the insurance premium of the a annuity insurance is increased and the insurance premiums of the b mortality insurance and the c cancer insurance are decreased.

On the contrary to the case in Fig. 16, in a case where the health condition of the user is worsened, the evaluation value V (i,j;p) of the a annuity insurance of the company A is decreased and the evaluation values V (i,j;p) of the b mortality insurance of the company B and the c cancer insurance of the company C are increased, and as a result, in the "change proposal", the insurance premium of the a annuity insurance is decreased and the insurance premiums of the b mortality insurance and the c cancer insurance are increased.

### <Fourth Insurance Table>

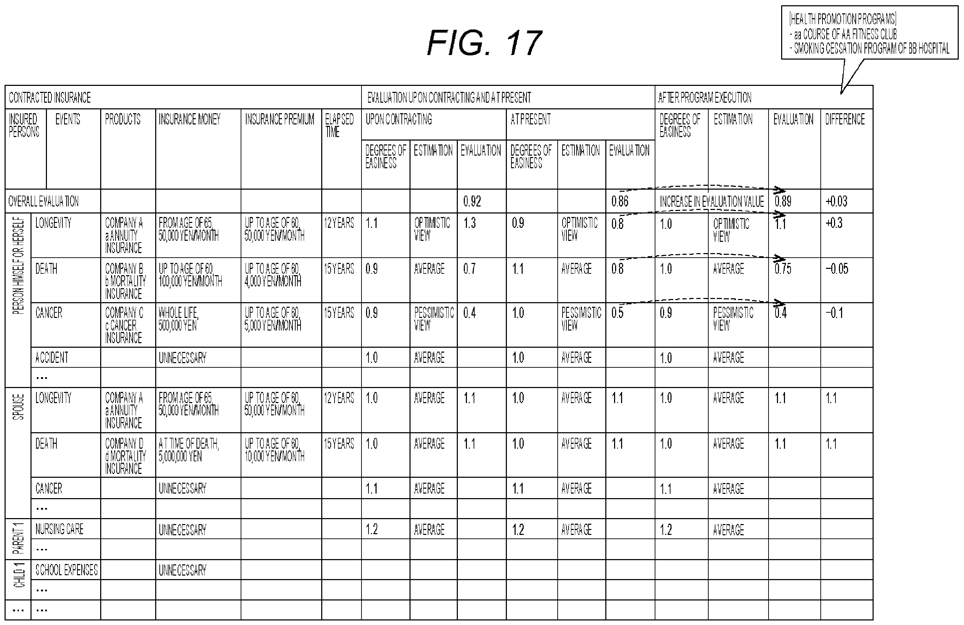

Fig. 17 is a diagram showing an example of a fourth insurance table.

As described with reference to Fig. 5, the fourth insurance table is an insurance table which prompts execution of a health promotion program.

In Fig. 17, the fourth insurance table includes sections (columns) of "contracted insurance", "evaluation upon contracting and at present", and "after execution of a program" and a section (row) of "overall evaluation".

The "contracted insurance", the "evaluation upon contracting and at present", and the "overall evaluation" are similar to the "contracted insurance", the "evaluation upon contracting and at present", and the "overall evaluation" in the first example (Fig. 12) of the third insurance table, respectively.

The "after execution of a program" includes sections (columns) of "degrees of easiness", "estimation", "evaluation", and "difference".

In the "degrees of easiness" and the "evaluation" of the "after execution of a program", in a case where the user (insured person) executes a health promotion program proposed by the fourth insurance table, a degree of development easiness λ (i) and an evaluation value V (i,j;p) which are calculated in accordance with a prediction value of a state of the user after the execution are arranged, respectively.

In the "estimation" of the "after execution of a program", for example, information similar to that in "estimation" upon contracting is arranged by default. The information in the "estimation" by default can be changed to "optimistic view", "pessimistic view", or "average" in accordance with an operation of the user.

In the "difference" of the "after execution of a program", a difference between an evaluation value V (i,j;p) arranged in the "after execution of a program" and an evaluation value V (i,j;p) arranged in the "evaluation" at present is arranged.

The insurance table generation unit 23 generates the fourth insurance table which includes health promotion programs (display thereof) which increase overall evaluation values of insurance products contracted by the user from overall evaluation values at present.

For example, the database 21 has stored therein, for example, a plurality of health promotion programs, such as a course of a fitness club and a smoking cessation program, which improves the health condition of the user.

As to each of the plurality of health promotion programs stored in the database 21, the insurance table generation unit 23 sets prediction values of the health condition of the user after execution in a case where the user has executed each of the health promotion programs.

Furthermore, by using the prediction values of the health condition of the user after execution of each of the health promotion programs, the insurance table generation unit 23 calculates degrees of development easiness λ (i) and further, evaluation values V (i,j;p) in the case where the user has executed each of the health promotion programs as to each of the insurance products contracted by the user.

By using the evaluation values V (i,j;p) of the insurance products contracted by the user in the case where the user has executed each of the health promotion programs, as to each of the plurality of health promotion programs, the insurance table generation unit 23 calculates overall evaluation values in the case where the user has executed each of the health promotion programs (hereinafter, also referred to as execution overall evaluation values).

Then, the insurance table generation unit 23 selects, as recommendation programs to be recommended to the user, top N health promotion programs whose execution overall evaluation values are larger than the overall evaluation values at present (N is a predetermined number of one or more), and arranges the selected health promotion programs in the fourth insurance table.

Furthermore, the insurance table generation unit 23 calculates differences between the evaluation values V (i,j;p) of the insurance products contracted by the user in a case where the user has executed the recommendation program or the recommendation programs and the evaluation values V (i,j;p) at present and differences between the execution overall evaluation values and the overall evaluation values at present.

In other words, the insurance table generation unit 23 calculates the evaluation values V (i,j;p) of the insurance products contracted by the user in the case where the user has executed the recommendation program or programs, calculated when the recommendation program or programs are selected; the differences between the evaluation values V (i,j;p) of the insurance products contracted by the user in the case where the user has executed the recommendation program or programs and the evaluation values V (i,j;p) at present by using the execution overall evaluation values; and the differences between the execution overall evaluation values and the overall evaluation values at present.

Then, by arranging the degrees of development easiness λ (i) in the case where the user has executed the recommendation program or programs in the "degrees of easiness" of the "after execution of a program"; arranging the evaluation values V (i,j;p) of the insurance products contracted by the user in the case where the user has executed the recommendation program or programs in the "evaluation" of the "after execution of a program"; arranging the differences between the evaluation values V (i,j;p) of the insurance products contracted by the user in the case where the user has executed the recommendation program or programs in the "degrees of easiness" of the "after execution of a program" and the evaluation values V (i,j;p) at present; and the differences between the execution overall evaluation values and the overall evaluation values at present, the insurance table generation unit 23 generates the fourth insurance table which includes the recommendation program or programs (display thereof).

In Fig. 17, as health promotion programs (recommendation programs) which allows the execution overall evaluation value to be 0.89 arranged in the "after execution of a program" changed from the overall evaluation value at present 0.86 arranged in the "evaluation upon contracting and at present", a "aa course of AA fitness club" and a "smoking cessation program of a BB hospital" are recommended.

According to the fourth insurance table, the user can recognize ways in which the evaluation values V (i,j;p) of the insurance products contracted by the user in the case where the user has executed the health promotion program or programs and the overall evaluation values change.

Furthermore, the user can recognize the ways in which the evaluation values V (i,j;p) of the insurance products contracted by the user in the case where the user has executed the health promotion program or programs and the overall evaluation values change, thereby enhancing motivation of the user to execute the health promotion program or programs and allowing the execution of the health promotion program to be prompted.

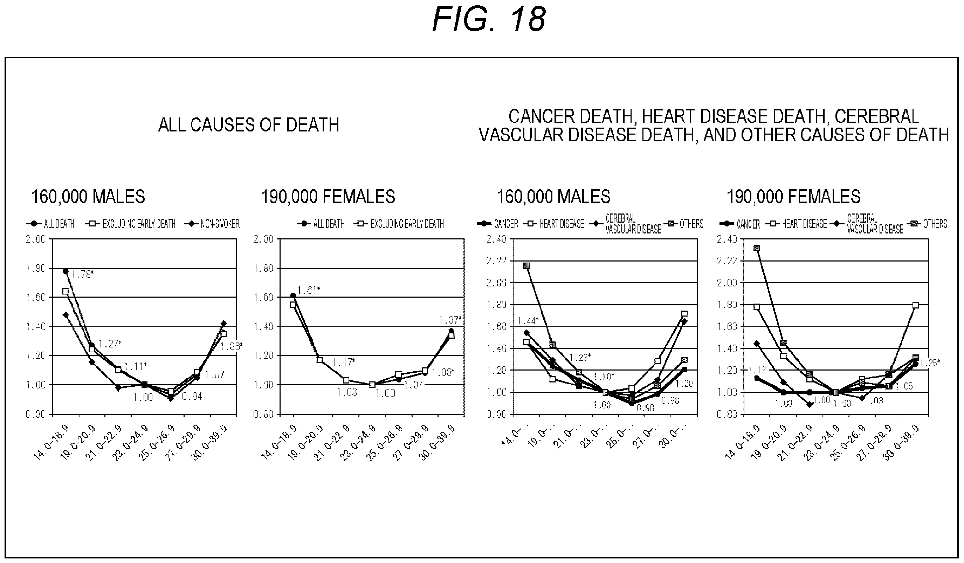

Fig. 18 is a diagram explaining an example of setting of the prediction values of the health condition of the user after the execution in the case where the user has executed the health promotion program or programs.

Fig. 18 shows relationship between BMI and a death risk of Japanese, which is introduced in the web page of National Research and Development Agency/National Cancer Center (https://epi.ncc.go.jp/can_prev/evaluation/2830.html).

The first and second graphs from the left in Fig. 18 show relationship between BMI and a mortality rate of males and females as to all causes of death. The third and fourth graphs from the left in Fig. 18 show relationship between BMI and a mortality rate of males and females as to cancer death, heart disease death, cerebral vascular disease death, and other causes of death.

Note that in Fig. 18, each horizontal axis shows BMI and each vertical axis shows the mortality rate. The mortality rate is a relative value with a mortality rate in a range of BMI of 23-25 as reference (1.00).

Hereinafter, a range of BMI in which the mortality rate is equal to or less than a threshold value is referred to as a proper range. The insurance table generation unit 23 sets, as a prediction value of the health condition of the user after the execution in the case where the user has executed the health promotion program or programs, BMI within the appropriate range as to a user whose BMI is out of the appropriate range. Then, as described with reference to Fig. 17, by using the prediction value, the insurance table generation unit 23 generates the fourth insurance table which includes the health promotion program or programs (recommendation program or programs) recommended for the user.

Note that in addition thereto, in the fourth insurance table, for example, in a case where the user has executed the health promotion program or programs, whereby a health condition of the user results in the prediction value of the health condition, an increase in the insurance money, which the user receives, and the like can be arranged. For example, in a case where there is annuity insurance among the insurance products contracted by the user, BMI of the user falls within the appropriate range, likelihood with which life is prolonged is high, and the total amount of insurance money of the annuity insurance which the user receives is increased by the prolonged time of the life. In the fourth insurance table, that increase is arranged and is thereby visualized, and thus, the user can be prompted to execute the health promotion program or programs.

### <Description of Computer to which the Present Technology Is Applied>

Next, a series of processes of the above-described server 11 and client 12 can be performed by hardware and can also be performed by software. In a case where the series of processes are performed by the software, a program constituting the software is installed in a general-purpose computer or the like.

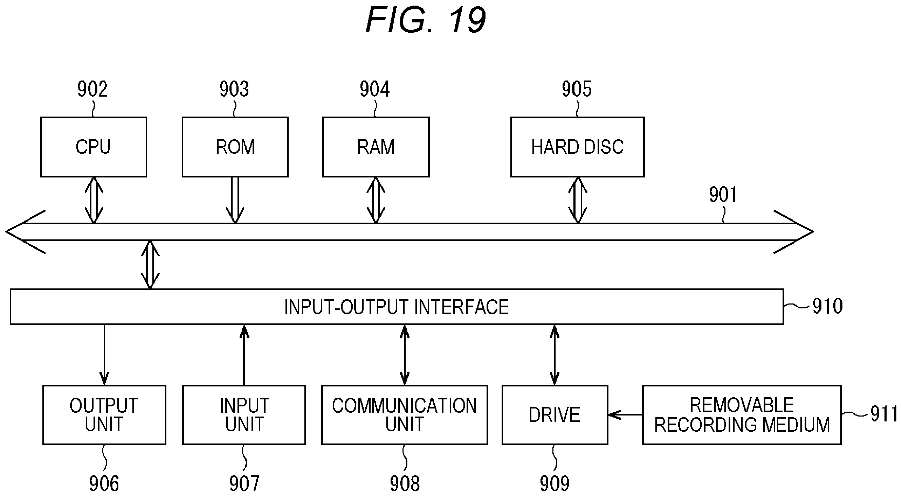

Fig. 19 is a block diagram showing a configuration example of one embodiment of the computer in which the program executing the above-described series of processes is installed.

The program can be previously recorded in a hard disc 905 as a recording medium built-in the computer or a ROM 903.

Alternatively, in addition, the program can be stored (recorded) in a removable recording medium 911 driven by a drive 909. The above-mentioned removable recording medium 911 can be provided as the so-called package software. Here, as the removable recording medium 911, there are, for example, a flexible disc, a compact disc read only memory (CD-ROM), a magneto optical (MO) disc, a digital versatile disc (DVD), a magnetic disc, a semiconductor memory, and the like.

Note that the program is installed in the computer from the removable recording medium 911 as described above and in addition thereto, the program can be downloaded into the computer via a communication network or a broadcasting network and can be installed in the built-in hard disc 905. In other words, the program can be transferred, for example, from a download site, to the computer in a wireless manner via an artificial satellite for digital satellite broadcasting or to the computer in a wired manner via a network such as a local area network (LAN) and the Internet.

The computer has a central processing unit (CPU) 902 built therein and an input-output interface 910 is connected via a bus 901 to the CPU 902.

When a command is inputted via the input-output interface 910 by an operation of the input unit 907 made by the user or the like, in response thereto, the CPU 902 executes the program stored in the read only memory (ROM) 903. Alternatively, the CPU 902 loads the program stored in the hard disc 905 to a random access memory (RAM) 904 and executes the program.

Thus, the CPU 902 performs processing in accordance with the above-described flowcharts or processing performed by the configuration of the above-described block diagram. Then, the CPU 902 outputs a processing result as needed, for example, via the input-output interface 910 from the output unit 906 or, for example, transmits the processing result from the communication unit 908 and further, records the processing result in the hard disc 905, and does others.

Note that the input unit 907 is constituted of a keyboard, a mouse, a microphone, and the like. In addition, the output unit 906 is constituted of a liquid crystal display (LCD), a loudspeaker, and the like.

Here, in the present description, it is not necessarily required to perform the processing, which the computer performs in accordance with the program, in chronological order along the order described in the flowcharts. In other words, the processing, which the computer performs in accordance with the program, also includes processing executed parallelly or individually (for example, parallel processing or processing by an object).

In addition, the program may be a program processed by one computer (processor) or may be a program processed by a plurality of computers in a distributed manner. Furthermore, the program may be a program which is transferred to a remote computer to be executed.

Note that the embodiment of the present technology is not limited to the above-described embodiment and various modifications can be made without departing from the scope of the present technology.

For example, the present technology can adopt a configuration of cloud computing in which one function is shared by a plurality of apparatuses via a network and is processed in a cooperative manner.

In addition, the steps described with reference to the above-described flowcharts are executed by one apparatus and in addition thereto, the steps can be executed by a plurality of apparatuses in a shared manner.

Furthermore, in a case where a plurality of processes is included in one step, the plurality of processes can be executed by one apparatus or in addition thereto, the plurality of processes can be executed by a plurality of apparatuses in a shared manner.

In addition, effects described in the present description are merely illustrative and not restrictive and there may be other effects.

Note that the present technology can adopt below configurations.
<1> A display control apparatus including
   a display control unit that causes an insurance table of insurance to be displayed, the insurance being detected in accordance with an evaluation value or evaluation values of the insurance preparing for a life relevant event or life relevant events being related to life, the evaluation value or evaluation values being calculated by using a development probability or development probabilities with which the life relevant event or life relevant events develop on a user.
<2> The display control apparatus according to <1>, in which as to the life relevant event or each of the life relevant events, the display control unit causes the insurance table of the insurance whose evaluation value is best to be displayed, a number of the life relevant event or life relevant events being one or more.
<3> The display control apparatus according to <2>, in which
   as to the life relevant event or each of the life relevant events being prepared by the insurance whose evaluation value is equal to or more than a threshold value, the display control unit causes the insurance table of insurance whose evaluation value is best to be displayed.
<4> The display control apparatus according to <2>, in which
   the display control unit causes the insurance table of insurance whose evaluation value is best, among the insurance which satisfies a predetermined condition, to be displayed.
<5> The display control apparatus according to any one of <2> to <4>, in which
   the display control unit causes the insurance table to be displayed, the insurance table including subscription time to the insurance, the subscription time making the evaluation value best.
<6> The display control apparatus according to <1>, in which
   among a plurality of combinations, each of which includes a plurality of insurance products, the display control unit
   causes the insurance table to be displayed, the insurance table including a combination of insurance products whose each minimum value,
   among overall evaluation values being obtained by integrating the evaluation values of the plurality of insurance products, which are calculated by using the development probabilities with respect to a health condition in a current state of the user and
   overall evaluation values being obtained by integrating the evaluation values of the plurality of insurance products, which are calculated by using the development probabilities with respect to a health condition being changed from the health condition of the user in the current state, is maximum.
<7> The display control apparatus according to <6>, in which
   among the plurality of combinations, each of which includes the plurality of insurance products, the display control unit
   causes the insurance table to be displayed, the insurance table including a combination of insurance products whose each minimum value,
   among the overall evaluation values being obtained by integrating the evaluation values of the plurality of insurance products, which are calculated by using the development probabilities with respect to the health condition in the current state of the user,
   overall evaluation values being obtained by integrating the evaluation values of the plurality of insurance products, which are calculated by using the development probabilities with respect to a health condition being improved from the health condition of the user in the current state, and
   overall evaluation values being obtained by integrating the evaluation values of the plurality of insurance products, which are calculated by using the development probabilities with respect to a health condition being worsened from the health condition of the user in the current state, is maximum.
<8> The display control apparatus according to <1>, in which
   the display control unit causes the insurance table including insurance whose evaluation value is improved from an evaluation value of insurance being contracted by the user to be displayed.
<9> The display control apparatus according to <8>, in which
   the display control unit, within a range of a total amount of insurance premiums of the insurance being contracted by the user, causes the insurance table including insurance whose evaluation value is improved from the evaluation value of insurance being contracted by the user to be displayed.
<10> The display control apparatus according to <1>, in which
   the display control unit causes the insurance table to be displayed, the insurance table including insurance whose evaluation value is limited to a predetermined value.
<11> The display control apparatus according to <1>, in which
   the display control unit causes the insurance table to be displayed, the insurance table including insurance premiums after allocation in which a total amount of the insurance premiums of a plurality of insurance products is allocated to the plurality of insurance products in accordance with the evaluation values of the plurality of insurance products.
<12> The display control apparatus according to <1>, in which the
   display control unit causes the insurance table to be displayed, the table including an evaluation value in a case where the user has executed a health promotion program which improves the evaluation value.
<13> The display control apparatus according to any one of <1> to <12>, in which
   an evaluation value or evaluation values of the insurance are calculated by using an expectation value or expectation values of payment of the insurance being calculated by using the development probability or development probabilities and an expectation value or expectation values of refund money of the insurance.
<14> The display control apparatus according to <13>, in which
   a value or values showing a degree or degrees of the evaluation value or evaluation values of the refund money with respect to the expectation value or expectation values of the payment of the insurance are calculated as the evaluation value or evaluation values of the insurance.
<15> The display control apparatus according to any one of <1> to <14>, in which
   the insurance table includes the evaluation value or evaluation values of the insurance.
<16> The display control apparatus according to any one of <1> to <15>, in which
   the development probability or development probabilities are in accordance with Weibull distribution.
<17> A display control method including
   causing an insurance table of insurance to be displayed, the insurance being detected in accordance with an evaluation value or evaluation values of the insurance preparing for a life relevant event or life relevant events being related to life, the evaluation value or evaluation values being calculated by using a development probability or development probabilities with which the life relevant event or life relevant events develop on a user.
<18> A program to cause a computer to function as
   a display control unit that causes an insurance table of insurance to be displayed, the insurance being detected in accordance with an evaluation value or evaluation values of the insurance preparing for a life relevant event or life relevant events being related to life, the evaluation value or evaluation values being calculated by using a development probability or development probabilities with which the life relevant event or life relevant events develop on a user.

### REFERENCE SIGNS LIST

- 10: Insurance recommendation system
- 11: Server
- 12: Client
- 13: Network
- 21: Database
- 22: Evaluation value calculation unit
- 23: Insurance table generation unit
- 24: Registration unit
- 25, 31: Communication unit
- 32: Display control unit
- 33: Display unit
- 34: Operation unit
- 901: Bus
- 902: CPU
- 903: ROM
- 904: RAM
- 905: Hard disc
- 906: Output unit
- 907: Input unit
- 908: Communication unit
- 909: Drive
- 910: Input-output interface
- 911: Removable recording medium

## Claims

1. A display control apparatus comprising
a display control unit that causes an insurance table of insurance to be displayed, the insurance being detected in accordance with an evaluation value or evaluation values of the insurance preparing for a life relevant event or life relevant events being related to life, the evaluation value or evaluation values being calculated by using a development probability or development probabilities with which the life relevant event or life relevant events develop on a user.

2. The display control apparatus according to claim 1, wherein
as to the life relevant event or each of the life relevant events, the display control unit causes the insurance table of the insurance whose evaluation value is best to be displayed, a number of the life relevant event or life relevant events being one or more.

3. The display control apparatus according to claim 2, wherein,
as to the life relevant event or each of the life relevant events being prepared by the insurance whose evaluation value is equal to or more than a threshold value, the display control unit causes the insurance table of insurance whose evaluation value is best to be displayed.

4. The display control apparatus according to claim 2, wherein
the display control unit causes the insurance table of insurance whose evaluation value is best, among the insurance which satisfies a predetermined condition, to be displayed.

5. The display control apparatus according to claim 2, wherein
the display control unit causes the insurance table to be displayed, the insurance table including subscription time to the insurance, the subscription time making the evaluation value best.

6. The display control apparatus according to claim 1, wherein
among a plurality of combinations, each of which includes a plurality of insurance products, the display control unit
causes the insurance table to be displayed, the insurance table including a combination of insurance products whose each minimum value,
among overall evaluation values being obtained by integrating the evaluation values of the plurality of insurance products, which are calculated by using the development probabilities with respect to a health condition in a current state of the user and
overall evaluation values being obtained by integrating the evaluation values of the plurality of insurance products, which are calculated by using the development probabilities with respect to a health condition being changed from the health condition of the user in the current state, is maximum.

7. The display control apparatus according to claim 6, wherein
among the plurality of combinations, each of which includes the plurality of insurance products, the display control unit
causes the insurance table to be displayed, the insurance table including a combination of insurance products whose each minimum value,
among the overall evaluation values being obtained by integrating the evaluation values of the plurality of insurance products, which are calculated by using the development probabilities with respect to the health condition in the current state of the user,
overall evaluation values being obtained by integrating the evaluation values of the plurality of insurance products, which are calculated by using the development probabilities with respect to a health condition being improved from the health condition of the user in the current state, and
overall evaluation values being obtained by integrating the evaluation values of the plurality of insurance products, which are calculated by using the development probabilities with respect to a health condition being worsened from the health condition of the user in the current state, is maximum.

8. The display control apparatus according to claim 1, wherein
the display control unit causes the insurance table including insurance whose evaluation value is improved from the evaluation value of insurance being contracted by the user to be displayed.

9. The display control apparatus according to claim 8, wherein
the display control unit, within a range of a total amount of insurance premiums of the insurance being contracted by the user, causes the insurance table including insurance whose evaluation value is improved from the evaluation value of insurance being contracted by the user to be displayed.

10. The display control apparatus according to claim 1, wherein
the display control unit causes the insurance table to be displayed, the insurance table including insurance whose evaluation value is limited to a predetermined value.

11. The display control apparatus according to claim 1, wherein
the display control unit causes the insurance table to be displayed, the insurance table including insurance premiums after allocation in which a total amount of the insurance premiums of a plurality of insurance products is allocated to the plurality of insurance products in accordance with the evaluation values of the plurality of insurance products.

12. The display control apparatus according to claim 1, wherein
the display control unit causes the insurance table to be displayed, the table including an evaluation value in a case where the user has executed a health promotion program which improves the evaluation value.

13. The display control apparatus according to claim 1, wherein
an evaluation value or evaluation values of the insurance are calculated by using an expectation value or expectation values of payment of the insurance being calculated by using the development probability or development probabilities and an expectation value or expectation values of refund money of the insurance.

14. The display control apparatus according to claim 13, wherein
a value or values showing a degree or degrees of the evaluation value or evaluation values of the refund money with respect to the expectation value or expectation values of the payment of the insurance are calculated as the evaluation value or evaluation values of the insurance.

15. The display control apparatus according to claim 1, wherein
the insurance table includes the evaluation value or evaluation values of the insurance.

16. The display control apparatus according to claim 1, wherein
the development probability or development probabilities are in accordance with Weibull distribution.

17. A display control method comprising
causing an insurance table of insurance to be displayed, the insurance being detected in accordance with an evaluation value or evaluation values of the insurance preparing for a life relevant event or life relevant events being related to life, the evaluation value or evaluation values being calculated by using a development probability or development probabilities with which the life relevant event or life relevant events develop on a user.

18. A program to cause a computer to function as
a display control unit that causes an insurance table of insurance to be displayed, the insurance being detected in accordance with an evaluation value or evaluation values of the insurance preparing for a life relevant event or life relevant events being related to life, the evaluation value or evaluation values being calculated by using a development probability or development probabilities with which the life relevant event or life relevant events develop on a user.
